# EUROPEAN PATENT APPLICATION

(11) **EP 4 823 125 A1**
(43) Date of publication of application: **14.10.2026**
(21) Application number: 24906558.2
(22) Date of filing: 20.12.2024
(51) Int. Cl.: H04W 4/02, H04W 4/44, H04W 4/46, H04W 4/38

(54) **SENSING MEASUREMENT METHOD AND APPARATUS**

(30) Priority: 22.12.2023 CN 202311796297
(71) Applicant: Huawei Technologies Co., Ltd., Shenzhen, Guangdong 518129 (CN)
(72) Inventor: ZHU, Fangyuan, Shenzhen, Guangdong 518129 (CN); YING, Jiangwei, Shenzhen, Guangdong 518129 (CN); LI, Meng, Shenzhen, Guangdong 518129 (CN); GE, Cuili, Shenzhen, Guangdong 518129 (CN)
(74) Representative: Huawei European IPR
(86) International application number: PCT/CN2024/141082
(87) International publication number: WO 2025/131087

(57) **Abstract**

A sensing measurement method and an apparatus are provided, relating to the field of communication technologies. A first core network element receives first information from a second core network element, where the first information includes identification information of a first candidate sensing device for sensing a target object and first sensing requirement information of the target object. The first core network element selects a first sensing device from the first candidate sensing device based on the first sensing requirement information of the target object. The first core network element sends a first sensing measurement request message to the first sensing device, where the first sensing measurement request message is used to request the first sensing device to perform sensing measurement on the target object. Accordingly, when a sensing device is a movable device, an appropriate sensing device can be selected for the target object to perform sensing measurement on the target object.

## Description

### CROSS-REFERENCE TO RELATED APPLICATIONS

This application claims priority to Chinese Patent Application No. 202311796297.2, filed with the China National Intellectual Property Administration on December 22, 2023 and entitled "SENSING MEASUREMENT METHOD AND APPARATUS", which is incorporated herein by reference in its entirety.

### TECHNICAL FIELD

This application relates to the field of communication technologies, and in particular, to a sensing measurement method and an apparatus.

### BACKGROUND

With the development of 5^{th} generation (5^{th} generation, 5G) networks, requirements for new sensing-based network capabilities are gradually emerging. For example, in scenarios such as smart cities and smart transportation, there is an increasing need to obtain relative locations and angles between objects, as well as sensing information such as the location, speed, and shape of a target object. For a movable target object, a sensing device with sensing capabilities can perform sensing measurement on the target object to enable tracking.

Network devices (for example, base stations) and terminal devices that have sensing capabilities may serve as sensing devices. When a terminal device is used as a sensing device, its mobility causes its location to be random. Therefore, when a sensing device is movable, how to select an appropriate sensing device to perform sensing measurement on a target object is a problem that needs to be resolved currently.

### SUMMARY

Embodiments of this application provide a sensing measurement method and an apparatus.

According to a first aspect, a sensing measurement method is provided, where the method includes: A first core network element receives first information from a second core network element, where the first information includes identification information of a first candidate sensing device for sensing a target object and first sensing requirement information of the target object. The first core network element selects a first sensing device from the first candidate sensing device based on the first sensing requirement information of the target object. The first core network element sends a first sensing measurement request message to the first sensing device, where the first sensing measurement request message is used to request the first sensing device to perform sensing measurement on the target object.

In the foregoing implementation, the first core network element may select, based on a candidate sensing device that is provided by the second core network element and that is used for the target object, a target sensing device from a candidate sensing device to perform sensing measurement on the target object, so that when a sensing device is a movable device, an appropriate sensing device can be selected for the target object, to perform sensing measurement on the target object.

In a possible implementation, that the first core network element selects the first sensing device from the first candidate sensing device based on the first sensing requirement information includes: The first core network element selects the first sensing device from the first candidate sensing device based on the first sensing requirement information as well as sensing capability information of the first candidate sensing device and/or location information of the first candidate sensing device.

In the foregoing implementation, the first core network element selects the target sensing device based on the sensing capability information of the first candidate sensing device and/or the location information of the first candidate sensing device, so that sensing measurement performance can be improved.

In a possible implementation, the method further includes: The first core network element obtains the sensing capability information of the first candidate sensing device from a third core network element serving the first candidate sensing device.

Optionally, that the first core network element obtains the sensing capability information of the first candidate sensing device from the third core network element serving the first candidate sensing device includes: The first core network element sends a request message to the third core network element, where the request message is used to request to obtain the sensing capability information of the first candidate sensing device. The first core network element receives a response message from the third core network element, where the response message includes the sensing capability information of the first candidate sensing device.

In a possible implementation, the method further includes: The first core network element obtains the location information of the first candidate sensing device from the third core network element serving the first candidate sensing device.

Optionally, that the first core network element obtains the location information of the first candidate sensing device from the third core network element serving the first candidate sensing device includes: The first core network element sends a request message to the third core network element, where the request message is used to request the location information of the first candidate sensing device. The first core network element receives a response message from the third core network element, where the response message includes the location information of the first candidate sensing device.

In a possible implementation, the first information further includes the location information of the first candidate sensing device.

In a possible implementation, the method further includes: The first core network element sends a request message to the second core network element when the target object moves to a first location, where the request message includes location information of the target object. The first core network element receives a response message from the second core network element, where the response message includes second information, and the second information includes identification information of a second candidate sensing device for sensing the target object. The first core network element selects a second sensing device from the second candidate sensing device. The first core network element sends a second sensing measurement request message to the second sensing device, where the second sensing measurement request message is used to request the second sensing device to perform sensing measurement on the target object.

In the foregoing implementation, when relative motion between the target object and a sensing device currently performing sensing measurement prevents the sensing device from continuing the sensing measurement on the target object, thereby requiring a new sensing device to be selected, the first core network element may obtain, from the second core network element, a candidate sensing device used to perform sensing measurement on the target object at a current location, so that the new sensing device may be selected from the candidate sensing device to replace an original sensing device, to continue to perform sensing measurement on the target object. In this way, continuity of a sensing service is implemented.

In a possible implementation, that the first core network element sends the request message to the second core network element when the target object moves to the first location includes: The first core network element sends the request message to the second core network element when the first core network element receives indication information from the first sensing device, where the indication information indicates that the first sensing device meets a sensing measurement termination condition.

In a possible implementation, the first sensing measurement request message includes the sensing measurement termination condition, and the sensing measurement termination condition is used to trigger the first sensing device to send the indication information when the target object meets the sensing measurement termination condition.

In a possible implementation, the sensing measurement termination condition includes one or more of the following: received power of the target object for a sensing signal is detected to be less than a threshold; or the target object moves out of or is about to move out of a sensing area of the sensing device.

In a possible implementation, that the first core network element sends the request message to the second core network element when the target object moves to the first location includes: The first core network element sends the request message to the second core network element when the first core network determines, based on sensing data obtained by the first sensing device by performing sensing detection on the target object, that the first sensing device meets a sensing measurement termination condition.

In a possible implementation, determining that the first sensing device meets the sensing measurement termination condition includes: if the first core network element determines that the target object moves out of or is about to move out of a sensing area of the first sensing device, determining that the first sensing device meets the sensing measurement termination condition; or if the first core network element determines that received power of the target object for a sensing signal sent by the first sensing device is less than a threshold, determining that the first sensing device meets the sensing measurement termination condition.

In a possible implementation, that the first core network element selects the second sensing device from the second candidate sensing device includes: The first core network element selects the second sensing device from the second candidate sensing device based on sensing capability information of the second candidate sensing device and/or location information of the second sensing device.

In a possible implementation, that the first core network element receives the first information from the second core network element includes: The first core network element receives a sensing service request message from the second core network element, where the sensing service request message includes the first information.

In a possible implementation, the sensing capability information includes one or more of the following: information about a supported sensing mode and information about the sensing area.

In a possible implementation, the first sensing requirement information includes one or more of the following: information about the target object and sensing measurement precision information. The information about the target object includes one or more of the following: the location information of the target object, a shape of the target object, and a size of the target object.

According to a second aspect, a sensing measurement method is provided, including: A first sensing device receives a first sensing measurement request message, where the first sensing measurement request message is used to request to perform sensing measurement on a target object. The first sensing device performs sensing measurement on the target object based on the first sensing measurement request message. The first sensing device sends a first message when the target object moves to a first location, where the first message includes second sensing requirement information of the target object, and the second sensing requirement information includes location information of the target object. The first sensing device receives first response messages from N sensing devices for sensing the target object, where N is an integer greater than or equal to 1. The first sensing device selects a second sensing device from the N sensing devices. The first sensing device sends a second sensing measurement request message to the second sensing device, where the second sensing measurement request message is used to request the second sensing device to perform sensing measurement on the target object.

In the foregoing implementation, when relative motion between the target object and a sensing device currently performing sensing measurement prevents the sensing device from continuing the sensing measurement on the target object, thereby requiring a new sensing device to be selected, the sensing device may obtain a candidate sensing device based on a discovery mechanism, so that the new sensing device may be selected from the candidate sensing device to replace an original sensing device, to continue to perform sensing measurement on the target object. In this way, continuity of a sensing service is implemented.

In a possible implementation, the second sensing requirement information further includes one or more of the following: sensing capability requirement information indicating a sensing capability requirement, or sensing measurement precision information indicating a sensing measurement precision requirement. The N sensing devices meet the sensing capability requirement indicated by the sensing capability requirement information, and/or meet the sensing measurement precision requirement indicated by the sensing measurement precision information.

Optionally, the sensing capability requirement information includes: information indicating a sensing capability type requirement, and/or information indicating a sensing area size requirement.

Optionally, the sensing measurement precision information includes a distance threshold between a sensing device and the target object and/or a signal strength threshold.

Optionally, the first sensing measurement request message includes the sensing capability requirement information and/or the sensing measurement precision information.

In a possible implementation, that the first sensing device selects the second sensing device from the N sensing devices includes: The first sensing device selects the second sensing device from the N sensing devices based on sensing capability information of the N sensing devices and/or location information of the N sensing devices.

In the foregoing implementation, when selecting a target sensing device from the candidate sensing device, the sensing device may select an appropriate sensing device based on sensing capability information and/or location information of the candidate sensing device, thereby improving sensing measurement performance.

In a possible implementation, the first response message sent by each of the N sensing devices includes sensing capability information of the sensing device and/or location information of the sensing device.

In a possible implementation, the sensing capability information includes one or more of the following: information about a supported sensing mode and information about a sensing area.

In a possible implementation, that the first sensing device sends the first message when the target object moves to the first location includes: The first sensing device sends the first message when the first sensing device determines, based on the sensing measurement performed on the target object, that the first sensing device meets the sensing measurement termination condition.

In a possible implementation, the first sensing measurement request message further includes the sensing measurement termination condition.

In a possible implementation, the sensing measurement termination condition includes one or more of the following: received power of the target object for a sensing signal is less than a threshold; or the target object moves out of or is about to move out of the sensing area.

In a possible implementation, after the first sensing device selects the second sensing device from the N sensing devices, the method further includes: The first sensing device sends a notification message to a first core network element, where the notification message includes an identifier of the second sensing device, and the first core network element is configured to receive sensing data of the second sensing device.

According to a third aspect, a communication apparatus is provided, including a unit or module configured to perform the method according to any one of the possible implementations of the first aspect, or including a unit or module configured to perform the method according to any one of the possible implementations of the second aspect.

According to a fourth aspect, a communication apparatus is provided, including: one or more processors configured to perform the method according to any one of the possible implementations of the first aspect, or perform the method according to any one of the possible implementations of the second aspect.

According to a fifth aspect, a readable storage medium is provided. The readable storage medium stores a program. When the program is executed by a communication apparatus, the method according to any one of the possible implementations of the first aspect is implemented, or the method according to any one of the possible implementations of the second aspect is implemented.

According to a sixth aspect, a chip system is provided, including: a memory, configured to store a computer program; and a processor, where after the processor invokes the computer program from the memory and runs the computer program, a communication apparatus on which the chip system is installed is enabled to perform the method according to any one of the possible implementations of the first aspect or the method according to any one of the possible implementations of the second aspect.

According to a seventh aspect, a computer program product is provided. When the computer program product is invoked by a computer, the computer is enabled to perform the method according to any one of the possible implementations of the first aspect or the method according to any one of the possible implementations of the second aspect.

### BRIEF DESCRIPTION OF DRAWINGS

FIG. 1 is a diagram of a self-sending and self-receiving mode in sensing measurement applied according to an embodiment of this application;
FIG. 2 is a diagram of a self-sending and other-receiving mode in sensing measurement applied in an embodiment of this application;
FIG. 3 is a diagram of a scenario of tracking and sensing an unmanned aerial vehicle route in a related technology;
FIG. 4 is a diagram of a 5G network architecture based on a point-to-point interface to which an embodiment of this application is applied;
FIG. 5 is a diagram of a 5G network architecture based on a service-based interface to which an embodiment of this application is applied;
FIG. 6 is a schematic flowchart of a sensing measurement method according to an embodiment of this application;
FIG. 7 is a schematic flowchart of another sensing measurement method according to an embodiment of this application;
FIG. 8A, FIG. 8B, and FIG. 8C are a schematic flowchart of a sensing measurement method in Example 1 according to an embodiment of this application;
FIG. 9A, FIG. 9B, and FIG. 9C are a schematic flowchart of a sensing measurement method in Example 2 according to an embodiment of this application;
FIG. 10A, FIG. 10B, and FIG. 10C are a schematic flowchart of a sensing measurement method in Example 3 according to an embodiment of this application;
FIG. 11A, FIG. 11B, FIG. 11C, and FIG. 11D are a schematic flowchart of a sensing measurement method in Example 4 according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

Embodiments of this application relate to a radio sensing technology. To better understand embodiments of this application, the radio sensing technology is first described.

Existing wireless signals (such as sound, light, and radio frequency signals) in an environment may be used to sense the environment. The radio frequency signal is used as an example. A radio wave generated by a signal transmitter may undergo physical phenomena such as direct radiation, reflection, and scattering in a propagation process, to form a plurality of propagation paths. In this way, a multi-path superimposed signal formed at a signal receiver carries information reflecting signal propagation space. In the radio sensing technology, a characteristic of signal propagation space (channel) is obtained by analyzing a change of a wireless signal during propagation, to implement scenario sensing. In a wireless communication process, electromagnetic waves carry environment information when transferring signals in space propagation. For example, if a wireless fidelity (wireless fidelity, Wi-Fi) signal received by a mobile phone is weak, a possible cause is that the mobile phone is far away from a wireless router. If strength of the Wi-Fi signal received by the mobile phone decreases sharply, this is probably because the mobile phone enters specific closed space, such as an elevator. In this example, received signal strength (received signal strength indicator, RSSI) is used as a characteristic to infer a location and an environment of the mobile phone.

Radar sensing is a common radio sensing technology. A location, a shape, a motion characteristic, and a motion trajectory of a target are extracted and discovered by analyzing a characteristic of a received target echo, and characteristics of the target and an environment may be further deduced. Radar sensing may support a wide range of application scenarios. For example, millimeter-wave radar has been widely used in the field of vehicle-assisted driving to detect pedestrians and vehicles in front and implement anti-collision warning. In addition, radar sensing has many potential applications in fields such as home, smart building, self-driving, and wearable devices.

In addition to radar sensing, other sensor sensing is further included, for example, visual sensor sensing and ultrasonic sensing.

With development of 5G networks, requirements for new sensing-based network capability are gradually emerging. For example, in some scenarios of smart city and smart transportation, requirements for obtaining relative locations and angles between objects, and sensing information such as a distance, a speed, and a shape of a target object gradually emerge. To meet these service requirements, the 5G network requires further enhancement of core network functions, for example, requires a capability of assisting a wireless network in performing sensing. In a 5G system or a future communication system, an integrated radar-communication base station may be deployed to enhance a sensing capability of the base station. Based on a precise sensing capability of a radar, precise communication may be performed, thereby improving communication efficiency. For example, time division multiplexing or spatial division multiplexing is performed on a communication resource and a sensing resource of the base station, to sense an environment or object around. A sensing function may be applied in security scenarios in which cameras cannot be installed. For example, in a specific industrial park, intrusion of a flying object like an unmanned aerial vehicle can be detected. For another example, in a traffic scenario, a roadside station with a sensing capability may complete functions such as traffic flow statistics collection and vehicle navigation.

In addition to sensing an environment or an object based on a base station or a roadside device at a fixed location, a mobile terminal device may also have a sensing capability, to sense a surrounding environment or an object.

In embodiments of this application, one or more sensing modes may be supported based on a sensing capability of the terminal device. The sensing mode of the terminal device is a manner in which the terminal device performs sensing measurement on a surrounding environment or an object.

For example, in embodiments of this application, the terminal device may support one or more of the following sensing modes.

First sensing mode: a working mode in which a terminal device serves as both a sensing signal transmit end and a sensing signal receive end. This mode is also referred to as a self-sending and self-receiving mode.

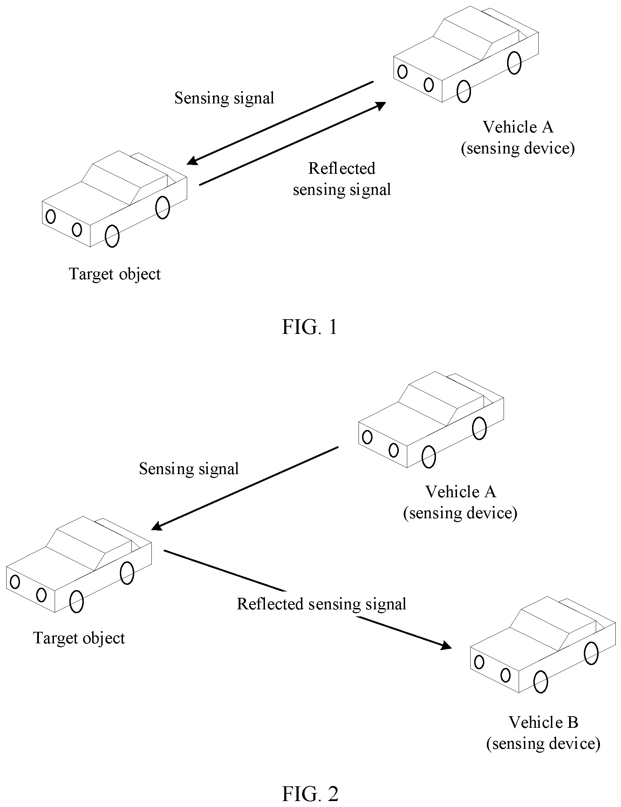

In this mode, the terminal device sends a sensing signal, and collects a sensing signal reflected to another object in a surrounding environment. An example of the first sensing mode may be shown in FIG. 1. A vehicle A is a sensing device, the vehicle A sends a sensing signal, and the sensing signal is received by the vehicle A after being reflected by a target object. The vehicle A may sense information such as a location and a speed of a target by comparing between transmitted and received sensing signals. For example, the sensing signal sent by the vehicle A may be a radar signal.

Second sensing mode: A terminal device is used as a sensing signal transmit end, and another terminal device is used as a sensing signal receive end. This mode is also referred to as a self-sending and other-receiving mode of pure terminal devices. In this mode, the terminal device sends a sensing signal, and the another terminal device collects a sensing signal reflected by another object in a surrounding environment. An example of the second sensing mode may be shown in FIG. 2. A vehicle A is a sensing signal transmit end or referred to as a sensing transmit end (sensing transmitter), and a vehicle B is a sensing signal receive end or referred to as a sensing receive end (sensing receiver). The vehicle A sends a sensing signal, and the sensing signal is received by the vehicle B after being reflected by a target object. The vehicle B may measure information such as a location and a speed of a target by using the received signal. For example, the sensing signal sent by the vehicle A may be a radar signal.

Third sensing mode: A terminal device is used as a sensing signal transmit end, and a radio access network device is used as a sensing signal receive end. In this mode, the terminal device sends a sensing signal, and the radio access network device collects a sensing signal reflected by another object in a surrounding environment.

Fourth sensing mode: A radio access network is used as a sensing signal transmit end, and a terminal device is used as a sensing signal receive end. In this mode, the radio access network device sends a sensing signal, and the terminal device collects a sensing signal reflected by another object in a surrounding environment.

It should be understood that the foregoing four sensing modes are merely examples of sensing modes provided in embodiments of this application, and are not limited in this application.

It should be understood that different sensing modes may have different requirements on a sensing capability of the sensing device. For example, the first sensing mode requires the terminal device to have a capability of sending a sensing signal, and to have a capability of receiving and identifying a sensing signal sent by the terminal device. The second sensing mode requires a collaboration capability between different terminal devices, and the third sensing mode and the fourth sensing mode require a collaboration capability between the terminal device and the radio access network device.

It should be understood that, in different application scenarios, different sensing modes may be used to perform sensing measurement on a surrounding environment or an object.

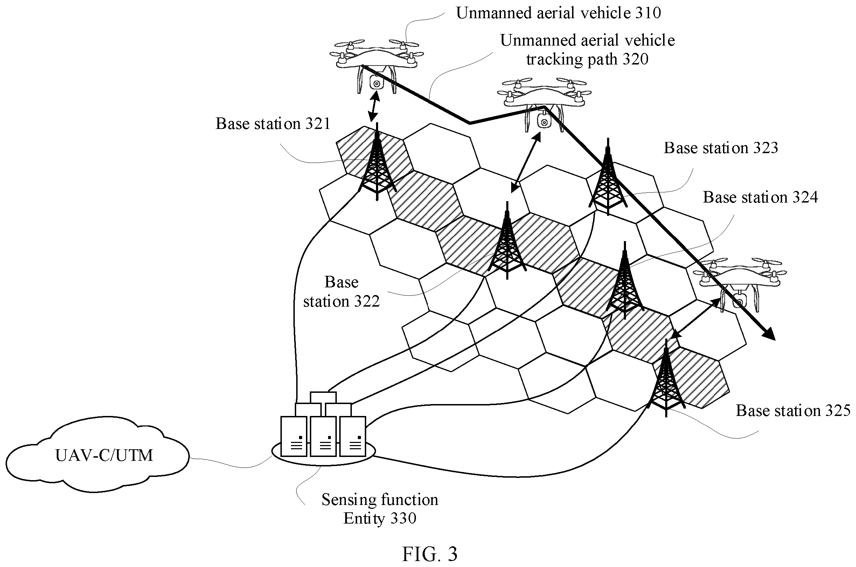

A related technology provides a scenario of tracking and sensing an unmanned aerial vehicle route, and this sensing scenario requires continuity of a sensing service. FIG. 3 shows an example of a scenario of tracking and sensing an unmanned aerial vehicle route. As shown in FIG. 3, in a process of performing a flight mission, an unmanned aerial vehicle crosses sensing areas of a plurality of base stations. For example, an unmanned aerial vehicle 310 in FIG. 3 passes through sensing areas of a base station 321, a base station 322, and a base station 325 in its flight process. The base station 321, the base station 322, and the base station 325 perform sensing measurement on the unmanned aerial vehicle 310, and send sensing data to a sensing function entity 330 in a 5G core network. The sensing function entity 330 determines a tracking path 320 of the unmanned aerial vehicle 310 based on the sensing data of each base station. From a service perspective, the unmanned aerial vehicle needs to be continuously tracked.

Similarly, a related technology further provides a home health detection sensing scenario. A user wears a health detection apparatus, and the health detection apparatus moves with movement of the user, and continuous tracking needs to be implemented on the health detection apparatus.

When a sensing device is a base station, because a deployment location of the base station is generally fixed and known, an appropriate base station may be determined as the sensing device based on a location of the unmanned aerial vehicle. When the sensing device is a mobile terminal device, the terminal device accesses a network randomly, and a location of the terminal device is not fixed. Therefore, how to implement continuity of the sensing service is a problem that needs to be resolved currently.

Therefore, embodiments of this application provide a sensing measurement method and a related apparatus that can implement the method. In embodiments of this application, in a scenario in which a sensing device is a movable device, a first core network element or a current sensing device of a target object may obtain, based on a location of the target object, a group of candidate sensing devices that can perform sensing measurement on the target object at the location, and then select a sensing device from the group of candidate sensing devices based on sensing capabilities of the group of candidate sensing devices or further with reference to the location of the sensing device, to perform sensing measurement on the target object. Each time a sensing device needs to be re-determined for the target object (for example, when the sensing device moves out of or is about to move out of a sensing range of the current sensing device), the target sensing device that matches a current location of the target object may be determined in the foregoing manner to measure the target object, thereby implementing continuity of a sensing service.

The following describes embodiments of this application in detail with reference to accompanying drawings.

The sensing device in embodiments of this application can implement sensing measurement on a target or an environment. The sensing device may include a terminal device, and the sensing device may support one or more of the foregoing sensing modes.

In embodiments of this application, the terminal device is a device having a wireless transceiver function, and may be a mobile device, a handheld device (for example, a mobile phone), a wearable device, a vehicle-mounted device, or a wireless apparatus (for example, a communication module, a modem, or a chip system) built in the foregoing device. The terminal device is configured to connect people, objects, machines, and the like, and may be widely used in various scenarios, for example, including but not limited to, the following scenarios: cellular communication, device-to-device (device-to-device, D2D) communication, V2X, machine-to-machine/machine type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), remote medical (remote medical), smart grid (smart grid), smart furniture, smart office, smart wearable, smart transportation, smart city (smart city), unmanned aerial vehicle, robot, and the like. The terminal device may sometimes be referred to as UE, a terminal, an access station, a UE station, a remote station, a wireless communication device, a user apparatus, or the like.

The terminal device in embodiments of this application may also be a fixed device, for example, a roadside unit (road side unit, RSU).

In embodiments of this application, a communication apparatus configured to implement a function of the terminal device may be a terminal device, or may be an apparatus that can support the terminal device in implementing the function, for example, a chip system. The apparatus may be installed in the terminal device. In the technical solutions provided in embodiments of this application, the technical solutions provided in embodiments of this application are described by using an example in which the apparatus configured to implement the function of the terminal device is a terminal device. In addition, for ease of description, in some embodiments of this application, UE is used to represent the terminal device.

A network device in embodiments of this application includes, for example, an access network device and/or a core network element.

The access network device is a device having a wireless transceiver function, and is configured to communicate with the terminal device. The access network device includes, but is not limited to, a base station (base transceiver station (base transceiver station, BTS), a NodeB, an eNodeB/eNB, or a gNodeB/gNB), a transmission reception point (transmission reception point, TRP), a base station evolved from the 3rd generation partnership project (3rd generation partnership project, 3GPP), an access node in a Wi-Fi system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in a vehicle-to-everything (vehicle-to-everything, V2X) technology may be an RSU.

The following provides descriptions by using an example in which the access network device is a base station. The base station may communicate with the terminal device, or may communicate with the terminal device via a relay station. The terminal device may communicate with a plurality of base stations in different access technologies.

The core network element is configured to implement functions such as mobility management, data processing, session management, and policy and charging. Names of network elements that implement core network functions in systems of different access technologies may be different. This is not limited in embodiments of this application. A 5G mobile communication system is used as an example. The core network element includes an access and mobility management function (access and mobility management function, AMF), a session management function (session management function, SMF), a policy control function (policy control function, PCF), a user plane function (user plane function, UPF), or the like.

It should be understood that the core network element may also be referred to as a core network device, a network function entity, a network function, a function entity, or the like. This is not limited in this application. For example, a network element that implements an access and mobility management function in a core network may be referred to as an access and mobility management function, an access and mobility management function entity, an AMF, an AMF network element, or the like.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, the technical solutions provided in embodiments of this application are described by using an example in which the apparatus configured to implement the function of the network device is a network device.

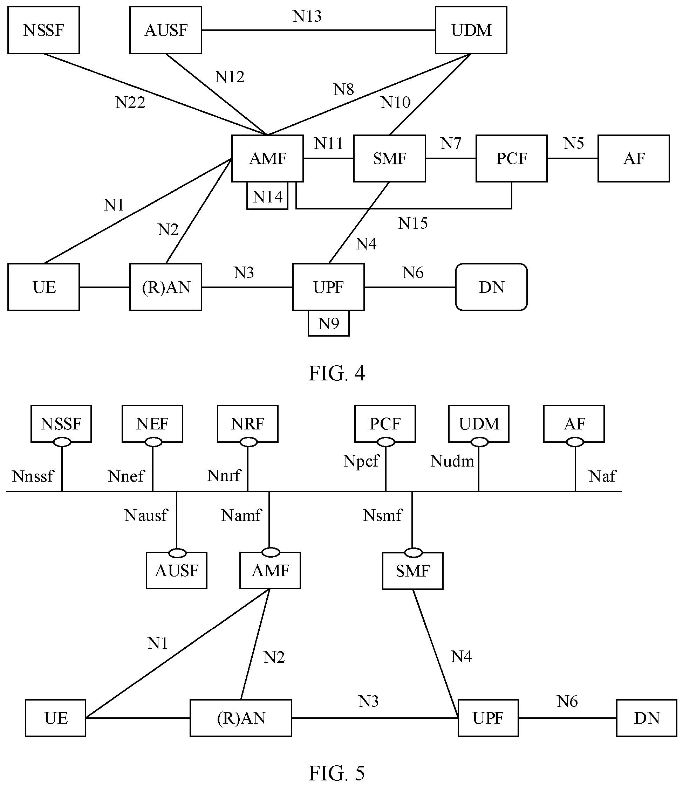

FIG. 4 is a diagram of a 5G network architecture based on a service-based architecture. The network architecture is also a network architecture to which an embodiment of this application is applied. The 5G network architecture shown in FIG. 1 may include three parts: a UE part, a data network (data network, DN) part, and an operator network part.

The operator network may include one or more of the following network elements: an authentication server function (authentication server function, AUSF), a network exposure function (network exposure function, NEF), a policy control function (policy control function, PCF), unified data management (unified data management, UDM), a unified data repository (unified data repository, UDR), a network storage function (network repository function, NRF), an application function (application function, AF), a network slice selection function (network slice selection function, NSSF), an AMF, an SMF, a (radio) access network ((radio) access network, (R)AN), a UPF, or the like.

The operator network includes the radio access network and a core network. The UE accesses the core network through the (R)AN, and the core network includes a user plane network element and a control plane network element. The user plane network element of the core network includes the UPF, and the control plane network element of the core network includes at least one of the AUSF, the AMF, the SMF, the NSSF, the NEF, the NRF, the UDM, the PCF, the AF, or the like.

The user plane network element (for example, the UPF) is mainly responsible for packet data packet forwarding, quality of service (quality of service, QoS) control, charging information statistics collection, and the like. The control plane network element is mainly responsible for service procedure interaction, and delivering a data packet forwarding policy, a QoS control policy, and the like to a user plane.

Functions of network elements in the core network are described as follows:
UPF: supports all or a part of the following functions: interconnection between a protocol data unit (protocol data unit, PDU) session and a data network, packet routing and forwarding (for example, supporting uplink classification (uplink classification) on traffic and then forwarding the traffic to a data network, and supporting a branching point (branching point) to support a multi-homed (multi-homed) PDU session), or data packet detection.
AMF: performs access management and mobility management on the UE, and is responsible for status maintenance of the UE, reachability management of the UE, forwarding of a non-mobility management (mobility management, MM) non-access-stratum (non-access-stratum, NAS) message, and forwarding of a session management (session management, SM) N2 message.
SMF: performs session management on the UE, and allocates and releases a resource for a session of the UE. The resource includes session QoS, a session path, a forwarding rule, or the like. The SMF is responsible for selecting or reselecting a UPF, allocating an Internet protocol (Internet protocol, IP) address, and further responsible for bearer establishment, modification, and release, and the like.
NEF: exposes a network function to a third party through a northbound application programming interface (application programming interface, API).
NRF: stores and selects network function entity information for another network element.
UDM: namely, user subscription context management, which manages subscription data of the UE and notifies a corresponding network element when the subscription data is modified.
UDR: namely, a unified data repository function, which is responsible for storing and retrieving subscription data, policy data, common architecture data, and the like, and is used for the UDM, the PCF, or the NEF to obtain related data. The UDR may have different data access authentication mechanisms for different types of data (for example, the subscription data and the policy data), to ensure data access security. The UDR needs to return a failure response carrying an appropriate cause value for an invalid service-based operation or data access request.
PCF: performs user policy management, and is used to generate and manage users, sessions, and QoS flow handling policies.
AF: namely, application management, which provides an application layer service for the UE. When providing a service for the UE, the AF has QoS (policy (policy)) and charging (charging) policy requirements and needs to notify a network. In addition, the AF also needs the core network to feed back application-related information.

Related interfaces between the network element functions in embodiments of this application include:
N1: an interface between the UE and a control plane of the core network.
N2: a communication interface between the (R)AN and the control plane of the core network.
N3: a communication interface between the (R)AN and the UPF, used to transmit user plane data.
N4: a communication interface between the SMF and the UPF, used by the SMF to perform policy configuration and the like on the UPF.
N6: a communication port between the UPF and the DN.

The control plane of the core network may use the service-based architecture, to be specific, a point-to-point communication mode in a conventional architecture is replaced with a service invoking mode for interaction between control plane network elements. In the service-based architecture, a control plane network element exposes a service to another control plane network element for invoking by the another control plane network element. In point-to-point communication, a set of specific messages exist in a communication interface between control plane network elements, and can be used only by control plane network elements at two sides of the interface during communication. FIG. 5 is a diagram of a 5G network architecture based on a service-based interface. The network architecture is another network architecture to which an embodiment of this application is applied. For network elements in the architecture shown in FIG. 2, refer to descriptions of related network elements in the architecture shown in FIG. 1.

The system architecture shown in FIG. 4 or FIG. 5 may further include a sensing function (sensing function, SF). The SF may be responsible for sensing-related service management, for example, selecting a sensing device, and determining parameters such as a location and a speed of a target object based on information from the sensing device. For example, the SF may be a network element newly added in the core network; or the SF may be an SMF, an AMF, or a location management function (location management function, LMF) with a sensing function added; or the SF may be a module in the SMF, the AMF, or the LMF; or the SF may also have a function of one or more of the SMF, the AMF, or the LMF, and may be understood as that the SF may be configured to replace one or more of the SMF, the AMF, or the LMF. The SF may also be referred to as a sensing function entity, a sensing function network element, or the like. This is not limited in this application.

It should be understood that embodiments of this application may be applied to a future communication system. When embodiments of this application are applied to the future communication system, names of the terminal device, the access network device, and a core network device that has a sensing function and another function may change. This is not limited in embodiments of this application. For ease of understanding, the following describes a specific solution by using an example in which embodiments of this application are applied to a 5G system.

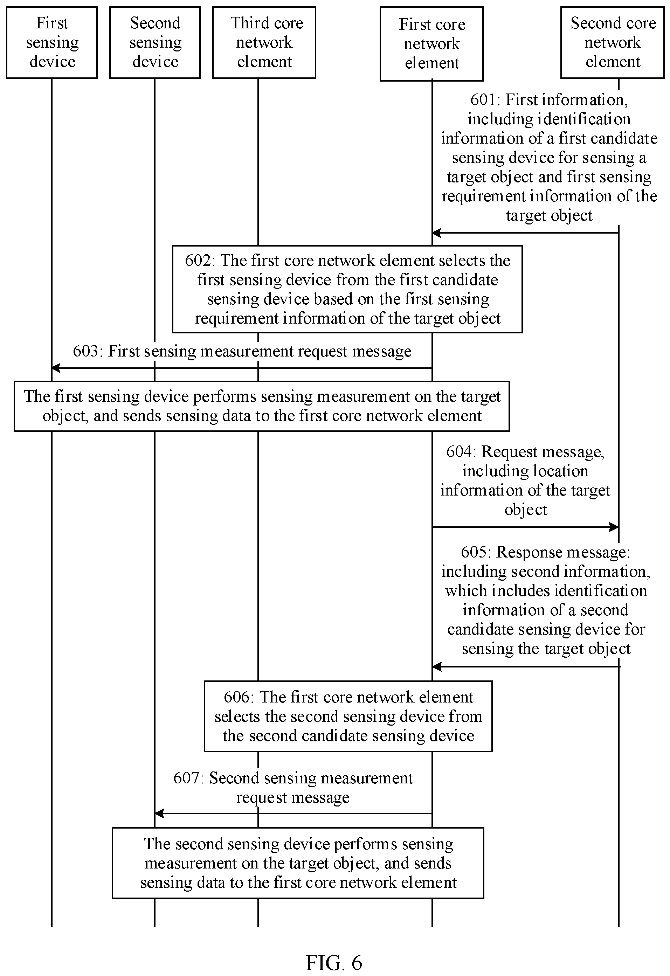

Based on a system architecture (for example, the system architecture shown in FIG. 4 or FIG. 5) to which an embodiment of this application is applicable, FIG. 6 is a schematic flowchart of a sensing measurement method according to an embodiment of this application. In this procedure, a first core network element may select a target sensing device from a candidate sensing device provided by a second core network element, to perform sensing measurement on a target object.

With reference to FIG. 6, a sensing measurement method provided in an embodiment of this application may include the following steps.

Step 601: A second core network element sends first information to a first core network element, where the first information includes identification information of a first candidate sensing device for sensing a target object and first sensing requirement information of the target object.

The first candidate sensing device for sensing the target object may be understood as a target sensing device selected from the first candidate sensing device to perform sensing measurement on the target object, or may be understood as one or more sensing devices determined by the second core network element for a purpose of performing sensing measurement on the target object.

The first candidate sensing device has a sensing capability. There may be one or more first candidate sensing devices. Optionally, the identification information of the first candidate sensing device may be presented as a first candidate sensing device list, where the list includes identification information of one or more candidate sensing devices. A form of the identification information is not limited in this application. For example, the identification information may be an ID or a URL. If the first core network element can obtain a sensing device through indexing based on identification information, it should be understood that the identification information is covered by the identification information in step 601.

Optionally, the first candidate sensing device may include a terminal device. For example, the first candidate sensing device may include a vehicle (or a connected vehicle) or a vehicle-mounted terminal.

In a possible implementation, the first core network element is a network element having a sensing function. For example, the first core network element may be an SF network element in a core network. The second core network element may be a sensing service related network element, for example, a network element that can initiate a sensing service request and provide sensing service related information. For example, the second core network element may be an AF network element.

It should be understood that the second core network element may send the first information to the first core network element by using another network element such as an NEF. For example, the AF sends the first information to the NEF, and the NEF sends the first information to the SF.

In a possible implementation, the first sensing requirement information may include information about the target object. Optionally, the information about the target object includes one or more of the following: location information of the target object, a shape of the target object, and a size of the target object. The second core network element sends the information about the target object to the first core network element. In this way, the first core network element can select an appropriate target sensing device from the first candidate sensing device based on information such as a location of the target object, for example, select a sensing device closest to the target object, to improve sensing measurement performance. In addition, the first core network element can provide information such as the location of the target object to the target sensing device, so that the target sensing device performs sensing measurement on the target object.

In a possible implementation, the first sensing requirement information may include sensing measurement precision information, to indicate precision required for performing sensing measurement on the target object. The second core network element sends the sensing measurement precision information to the first core network element, so that the first core network element can select an appropriate target sensing device from the first candidate sensing device based on the sensing measurement precision information, for example, select a sensing device that meets the sensing measurement precision. A distance between a sensing device and the target object may affect sensing measurement precision. A shorter distance indicates higher sensing measurement precision, and a longer distance indicates lower sensing measurement precision. Therefore, in a possible implementation, the sensing measurement precision information may include a distance requirement between the sensing device and the target object, for example, may be specifically a distance threshold between the sensing device and the target object. Correspondingly, when selecting the target sensing device, the first core network element may select, based on the distance threshold, a target sensing device whose distance from the target object is within a threshold range. In other words, the distance between the target sensing device and the target object is less than or equal to the distance threshold.

In a possible implementation, the first sensing requirement information includes information about the target object and sensing measurement precision information.

In a possible implementation, the first information further includes location information of the first candidate sensing device. For example, the first information includes location information of each candidate sensing device in a plurality of first candidate sensing devices. When determining the first candidate sensing device, the second core network element may determine, based on the location of the target object, a terminal device located in a specific range around the target object as the first candidate sensing device for the target object, and correspondingly, may send the location information of the first candidate sensing device to the first core network element. The second core network element sends the location information of the first candidate sensing device to the first core network element, so that the first core network element can select an appropriate target sensing device from the first candidate sensing device based on the location information of the first candidate sensing device, for example, select the sensing device closest to the target object, to improve sensing measurement performance.

In a possible implementation of step 601, the second core network element sends a sensing service request message to the first core network element, where the sensing service request message includes the first information. After receiving the sensing service request message, the first core network element obtains the first information in the sensing service request message. In this implementation, when initiating the sensing service request, the second core network element sends the sensing service related information (that is, the first information) to the first core network element. This can reduce signaling overheads when compared with sending the sensing service request and the sensing service related information separately by using different signaling.

As an alternative to step 601, in a possible implementation, the first core network element receives the identification information of the first candidate sensing device and the first sensing requirement information of the target object.

The first core network element may receive the identification information of the first candidate sensing device and the first sensing requirement information of the target object by using different messages. For example, the first core network element receives the first sensing requirement information of the target object from the second core network element, and then the first core network element requests and obtains, from the second core network element, the identification information of the first candidate sensing device for sensing the target object.

Optionally, the first core network element receives the identification information of the first candidate sensing device from a first device (for example, AF#1) and the first sensing requirement information of the target object from a second device (for example, a sensing request from AF#2). Optionally, the first candidate sensing device may be a first candidate sensing device corresponding to a first area or a first location.

Step 602: The first core network element selects a first sensing device from the first candidate sensing device based on the first sensing requirement information of the target object.

The first sensing device is a target sensing device used to perform sensing measurement on the target object. The first sensing device is a sensing device that can meet the first sensing requirement information and that is in the first candidate sensing device.

In a possible implementation, the first core network element may select the first sensing device from the first candidate sensing device based on the first sensing requirement information and sensing capability information of the first candidate sensing device.

Optionally, for a sensing device, first sensing capability information of the sensing device may include one or more of the following: information about a sensing mode supported by the sensing device, and information about a sensing area of the sensing device.

The information about the sensing mode of the sensing device may indicate a type of the sensing mode. For example, the information about the sensing mode may indicate that the sensing device supports only a first sensing mode, or the sensing device supports only a second sensing mode, or the sensing device supports both the first sensing mode and the second sensing mode. The information about the sensing area of the sensing device may indicate a size of a sensing range of the sensing device. For example, if the information about the sensing area is 100 centimeters, it indicates that the sensing range of the sensing device is a range of 100 centimeters around the sensing device. It may be understood that, a sensing device that can support both the first sensing mode and the second sensing mode has a stronger sensing capability than a sensing device that supports only the first sensing mode or the second sensing mode; and a sensing device with a larger sensing area has a stronger sensing capability than a sensing device with a smaller sensing area.

A possible implementation in which the first core network element selects the first sensing device from the first candidate sensing device based on the first sensing requirement information and the sensing capability information of the first candidate sensing device is as follows: The first core network element selects a sensing device with the strongest sensing capability from the first candidate sensing device based on capability information of each candidate sensing device in the first candidate sensing device, to improve sensing measurement performance. In another possible implementation, the first core network element selects, from the first candidate sensing device based on the sensing capability information of the first candidate sensing device and a measurement precision requirement corresponding to the sensing measurement precision information, a sensing device whose sensing capability can meet the measurement precision requirement.

Optionally, the sensing capability information of the first candidate sensing device may be obtained by the first core network element from a third core network element serving the first candidate sensing device. Optionally, the third core network element may be an AMF network element.

A possible implementation in which the first core network element obtains the sensing capability information of the first candidate sensing device from the third core network element serving the first candidate sensing device is as follows: The first core network element sends a request message to the third core network element serving the first candidate sensing device, where the request message is used to request to obtain the sensing capability information of the first candidate sensing device. The third core network element sends a response message to the first core network element based on the received request message, where the response message includes the sensing capability information of the first candidate sensing device.

In a possible implementation, the third core network element may obtain sensing capability information of a candidate sensing device in the following manner: After receiving a request message from the first core network element, the third core network element sends a request message to the candidate sensing device served by the third core network element, where the request message is used to request to obtain the sensing capability information. After receiving the request message, the candidate sensing device sends a response message to the third core network element, where the response message includes the sensing capability information of the candidate sensing device.

If N (N is an integer greater than or equal to 2) sensing devices in the first candidate sensing devices correspond to a same third core network element, or the third core network element serves the N candidate sensing devices, the first core network element may send identification information of the N candidate sensing devices to the third core network element by using one request message. The third core network element may separately send a request message to the N candidate sensing devices, to request to obtain sensing capability information. After receiving response messages sent by the N candidate sensing devices, the third core network element may send the sensing capability information of the N candidate sensing devices to the first core network element by using one response message, so that signaling overheads can be reduced.

If there are a plurality of first candidate sensing devices, and the plurality of candidate sensing devices correspond to different third core network elements, for example, a candidate sensing device 1 corresponds to an AMF 1, and a candidate sensing device 2 corresponds to an AMF 2, the first core network element separately sends a request message including identification information of the candidate sensing device 1 to the AMF 1, and sends a request message including identification information of the sensing device 2 to the AMF 2. The AMF 1 sends a request message to the candidate sensing device 1, to request to obtain sensing capability information of the candidate sensing device 1, and sends the sensing capability information of the candidate sensing device 1 to the first core network element. The AMF 2 sends a request message to the candidate sensing device 2, to request to obtain sensing capability information of the candidate sensing device 2, and sends the sensing capability information of the candidate sensing device 2 to the first core network element.

In another possible implementation, the third core network element may obtain the sensing capability information of the candidate sensing device in the following manner: After receiving a request message from the first core network element, the third core network element sends a request message to a fourth core network element, to request to obtain the sensing capability information of the first candidate sensing device. After receiving the request message, the fourth core network element sends a response message to the third core network element, where the response message includes the sensing capability information of the first candidate sensing device. The fourth core network element stores sensing capability information of a device; for example, the terminal device may register sensing capability information of the terminal device with the fourth core network element. Optionally, the fourth core network element may be an NRF. This is not limited in this application.

In a possible implementation, the first core network element may select the first sensing device from the first candidate sensing device based on the first sensing requirement information and the location information of the first candidate sensing device. A possible implementation in which the first core network element may select the first sensing device from the first candidate sensing device based on the first sensing requirement information and the location information of the first candidate sensing device is as follows: The first core network element selects, from the first candidate sensing device based on the location information of the target object and the location information of the first candidate sensing device, a sensing device closest to the target object as the first sensing device, to improve sensing measurement performance.

The location information of the first candidate sensing device may be the location information of the first candidate sensing device included in the first information. That is, the location information of the first candidate sensing device may be provided by the second core network element for the first core network element.

The location information of the first candidate sensing device may alternatively be obtained by the first core network element from the third core network element serving the first candidate sensing device. Optionally, the third core network element may be an AMF network element.

A possible implementation in which the first core network element obtains the location information of the first candidate sensing device from the third core network element serving the first candidate sensing device is as follows: The first core network element sends a request message to the third core network element serving the first candidate sensing device, where the request message is used to request to obtain the location information of the first candidate sensing device. The third core network element sends a response message to the first core network element based on the received request message, where the response message includes the location information of the first candidate sensing device.

In a possible implementation, the third core network element may obtain location information of a candidate sensing device in the following manner: After receiving a request message from the first core network element, the third core network element sends a request message to the candidate sensing device served by the third core network element, where the request message is used to request to obtain the location information. After receiving the request message, the candidate sensing device sends a response message to the third core network element, where the response message includes the location information of the candidate sensing device.

If N (N is an integer greater than or equal to 2) sensing devices in the first candidate sensing devices correspond to a same third core network element, or the third core network element serves the N candidate sensing devices, the third core network element may separately send a request message to the N candidate sensing devices to request to obtain location information. After receiving response messages sent by the N candidate sensing devices, the third core network element may send the location information of the N candidate sensing devices to the first core network element by using one response message, so that signaling overheads can be reduced. It may be understood that the third core network element may alternatively send the location information of the N candidate sensing devices to the first core network element by using N response messages. This is not limited in this embodiment of this application.

In the foregoing implementation, the first core network element may obtain a current location of the first candidate sensing device. Compared with the location information of the first candidate sensing device included in the first information, the location information obtained in real time in the foregoing manner has higher accuracy and/or higher precision. Therefore, the target candidate sensing device selected based on the location information is more suitable for performing sensing measurement on the target object.

In a possible implementation, the first core network element may select the first sensing device from the first candidate sensing device based on the first sensing requirement information, the sensing capability information of the first candidate sensing device, and the location information of the first candidate sensing device.

For a specific manner in which the first core network element obtains the sensing capability information of the first candidate sensing device and the location information of the first candidate sensing device, refer to the foregoing content. Details are not described herein again.

Step 603: The first core network element sends a first sensing measurement request to the first sensing device, where the first sensing measurement request is used to request the first sensing device to perform sensing measurement on the target object.

Optionally, the first sensing measurement request may include the information about the target object, for example, information such as the location information of the target object, the shape of the target object, and the size of the target object.

After receiving the first sensing measurement request, the first sensing device performs sensing measurement on the target object to obtain sensing data, and sends the sensing data to the first core network element. The first sensing device may perform sensing measurement on the target object based on a specified period, and send the sensing data to the first sensing device.

Optionally, the first sensing device may directly send the sensing data to the first core network element, or may send the sensing data to the first core network element through a third core network element (for example, an AMF network element) serving the first sensing device.

The first core network element may determine the location or a moving track of the target object based on the sensing data from the first sensing device. Further, the first core network element may send the location or the moving track of the target object to the second core network element.

When the first sensing device no longer meets a sensing measurement requirement, or cannot perform sensing measurement on the target object, the first core network element may obtain a second candidate sensing device from the second core network element, and select a new target sensing device from the second candidate sensing device, to take the place of the first sensing device to perform sensing measurement on the target object.

In a possible implementation, based on the procedure shown in FIG. 6, the following steps may be further included:
Step 604: The first core network element sends a request message to the second core network element when the target object moves to a first location, where the request message includes the location information of the target object.

"The target object moves to a first location" may be understood as that the target object moves to a location that triggers reselection of a sensing device for the target object, or may be understood as that the target object moves to a location that meets a sensing measurement termination condition, or may be understood as that the first sensing device no longer meets the sensing measurement requirement of the target object, or the first sensing device cannot perform sensing measurement on the target object. "Moving" herein may be understood as that the target object moves relative to a location of the first sensing device.

"The target object moves to a first location" may also be understood as that based on movement of the target object or movement of the first sensing device, or based on movement of the target object relative to the first sensing device, the first sensing device meets the sensing measurement termination condition, or a condition for reselecting a target sensing device for the target object is met currently.

Optionally, the sensing measurement termination condition may include: The target object moves out of or is about to move out of the sensing area of the sensing device, or the target object moves to an edge of the sensing area of the sensing device. For example, if a range of a sensing area of the first sensing device is 10 meters, when the target object moves to a position 10 meters away from the first sensing device, it is considered that the target object moves out of or is about to move out of the sensing area of the sensing device. For another example, if a range of a sensing area of the first sensing device is 10 meters, when the target object moves to a position 9 meters away from the first sensing device, it is considered that the target object moves out of or is about to move out of the sensing area of the sensing device.

Optionally, the sensing measurement termination condition may include: Received power of the target object for a sensing signal is less than a threshold. If the received power of the target object for the sensing signal sent by the sensing device is less than the threshold, it indicates that a distance between the target object and the sensing device is relatively long, and the target object may be about to move out of the sensing range of the sensing device. Alternatively, even if the target object does not move out of the sensing range of the sensing device, because the received power of the target object for the sensing signal is low, reflection of the sensing signal is weak, which affects sensing measurement performance.

Optionally, the sensing measurement condition may include that the target object moves out of or is about to move out of the sensing area of the sensing device, and include that received power of the target object for the sensing signal is less than a threshold. In other words, the first core network element is triggered to send a request message to the second core network element only when both the foregoing conditions are met, that is, a process of reselecting a target sensing device for the target object is triggered.

Based on the foregoing understanding of "the target object moves to a first location", in a possible implementation, when determining, based on sensing measurement of the target object, that the target object moves out or is about to move out of the sensing area of the first sensing device, the first sensing device sends indication information to the first core network element. After receiving the indication information, the first core network element sends the request message to the second core network element. In another possible implementation, the first sensing device sends indication information to the first core network element when determining, based on sensing measurement of the target object, that the received power of the target object for the sensing signal is less than a threshold. After receiving the indication information, the first core network element sends a request message to the second core network element.

The indication information indicates that the first sensing device meets the sensing measurement termination condition.

It should be understood that the indication information may also be understood as being used to trigger or indicate the first core network element to send a request message to the second core network element, to request to obtain the second candidate sensing device; or the indication information may be understood as being used to indicate the first core network element to obtain the second candidate sensing device; or the indication information may be understood as being used to indicate that the first sensing device is no longer suitable for performing sensing measurement on the target object, or the indication information indicates that the first sensing device can no longer perform sensing measurement on the target object; or the indication information may be understood as being used to indicate that the target object moves out of or is about to move out of the sensing area of the first sensing device. In conclusion, the indication information may be used to trigger reselection of a target sensing device for the target object.

In a possible implementation, the first sensing device may directly send the indication information to the first core network element, or may send the indication information to the first core network element through an AMF network element serving the first sensing device.

In a possible implementation, the first sensing measurement request sent to the first sensing device may include the foregoing sensing measurement termination condition. Based on the foregoing description of the sensing measurement termination condition, the sensing measurement termination condition may be used to trigger the first sensing device to send the indication information to the first core network element when the target object meets the sensing measurement termination condition, to trigger reselection of a sensing device for the target object.

Based on the foregoing understanding of "the target object moves to a first location", in a possible implementation, the first core network element sends the request message to the second core network element when the first core network element determines, based on the sensing data obtained by the first sensing device by performing sensing detection on the target object, that the first sensing device meets the sensing measurement termination condition. In other words, the first core network element may determine, based on the sensing data reported by the first sensing device, to initiate a process of reselecting a target sensing device for the target object.

Optionally, that the first core network element determines that the first sensing device meets the sensing measurement termination condition may include the following cases:

Case 1: If the first core network element determines that the target object moves out of or is about to move out of the sensing area of the first sensing device, the first core network element determines that the first sensing device meets the sensing measurement termination condition.

Case 2: If the first core network element determines that the received power of the target object for the sensing signal sent by the first sensing device is less than the threshold, the first core network element determines that the first sensing device meets the sensing measurement termination condition.

Case 3: If the first core network element determines that the target object moves out of or is about to move out of the sensing area of the first sensing device, and the first core network element determines that the received power of the target object for the sensing signal sent by the first sensing device is less than the threshold, the first core network element determines that the first sensing device meets the sensing measurement termination condition.

In a possible implementation, the first core network element sends the location information of the target object to the second core network element, so that the second core network element may determine, based on the location information of the target object, the second candidate sensing device that can perform sensing measurement on the target object, for example, determine a terminal device near the target object as the second candidate sensing device.

Step 605: The second core network element sends a response message to the first core network element, where the response message includes second information, and the second information includes identification information of the second candidate sensing device for sensing the target object.

Step 606: The first core network element selects a second sensing device from the second candidate sensing device.

Step 607: The first core network element sends a second sensing measurement request to the second sensing device, where the second sensing measurement request is used to request the second sensing device to perform sensing measurement on the target object.

After receiving the second sensing measurement request, the second sensing device performs sensing measurement on the target object to obtain sensing data, and sends the sensing data to the first core network element. The second sensing device may perform sensing measurement on the target object based on a specified period, and send the sensing data to the second sensing device.

Optionally, the second sensing device may directly send the sensing data to the first core network element, or may send the sensing data to the first core network element through a core network element (for example, an AMF network element) serving the second sensing device.

The first core network element may determine the location or the moving track of the target object based on the sensing data from the second sensing device. Further, the first core network element may send a location or a moving track of the target object to a second core network element.

It should be understood that, for details about the foregoing steps 605 to 607, reference may be made to the process of selecting the first sensing device and sending the first sensing measurement request to the first sensing device in steps 602 to 604, and details are not described herein again.

It should be understood that, when the second sensing device meets the sensing measurement termination condition, the first core network element may further reselect a target sensing device for the target object, and so on, until sensing measurement on the target object ends.

It should be understood that, a method for determining the first sensing device (that is, an initial sensing device) may be performed according to steps 601 to 603 in the procedure shown in FIG. 6, or may be another method, which is not limited in this application.

In the foregoing embodiment of this application, the first core network element may select, based on a candidate sensing device that is provided by the second core network element and that is used for the target object, a target sensing device from the candidate sensing device to perform sensing measurement on the target object. Based on the foregoing method, when relative motion between the target object and a sensing device currently performing sensing measurement prevents the sensing device from continuing the sensing measurement on the target object, thereby requiring a new sensing device to be selected, the first core network element may obtain, from the second core network element, a candidate sensing device used to perform sensing measurement on the target object at a current location, so that the new sensing device may be selected from the candidate sensing device to replace an original sensing device, to continue to perform sensing measurement on the target object. In this way, continuity of a sensing service is implemented.

In addition, when selecting the target sensing device from the candidate sensing device, the first core network element may select an appropriate sensing device based on sensing capability information and/or location information of the candidate sensing device, thereby improving sensing measurement performance.

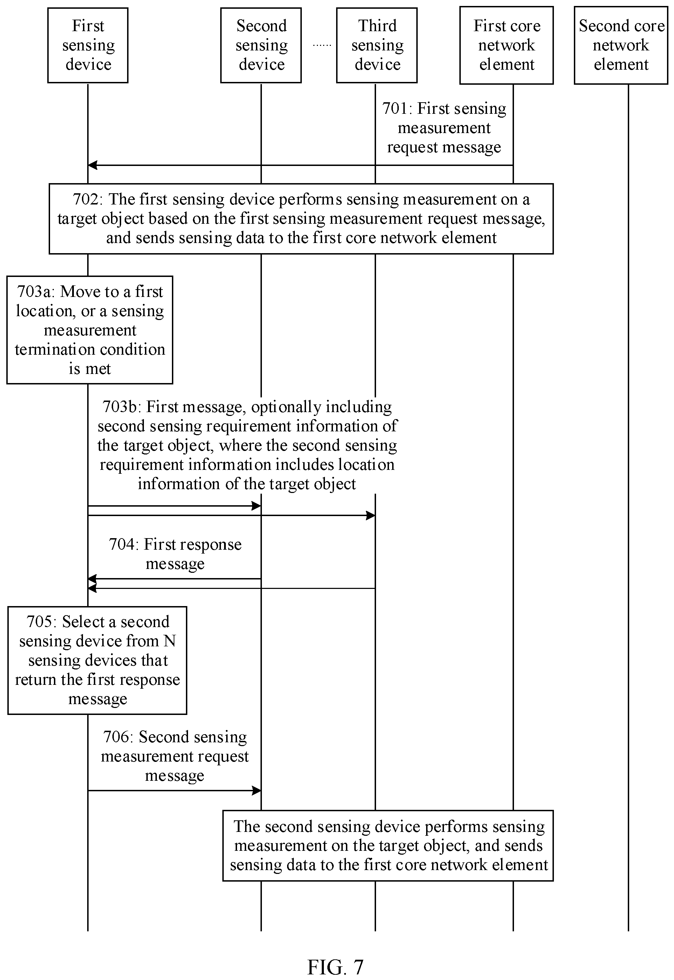

Based on a system architecture (for example, the system architecture shown in FIG. 4 or FIG. 5) to which an embodiment of this application is applicable, FIG. 7 is a schematic flowchart of another sensing measurement method according to an embodiment of this application. In this procedure, a first sensing device currently performing sensing measurement on a target object may obtain, by using a discovery mechanism, a next sensing device (a second sensing device) used for the target object, to take the place of the first sensing device to measure the target object.

With reference to FIG. 7, a sensing measurement method provided in an embodiment of this application may include the following steps.

Step 701: A first sensing device receives a first sensing measurement request message, where the first sensing measurement request message is used to request to perform sensing measurement on a target object.

Step 702: The first sensing device performs sensing measurement on the target object based on the first sensing measurement request message.

In a possible implementation, for a specific implementation of step 701 to step 702, refer to step 601 to step 603 in FIG. 6, or refer to step 604 to step 607 in FIG. 6. In other words, the first sensing device may be an initial sensing device used to perform sensing measurement on the target object, or may be a sensing device that is selected by a first core network element after the initial sensing device and that performs sensing measurement on the target object.

Step 703a and step 703b: The first sensing device sends a first message when the target object moves to a first location, where the first message includes second sensing requirement information of the target object, and the second sensing requirement information includes location information of the target object.

Optionally, the first message is a broadcast message.

Optionally, the first message may be sent over a device-to-device (device-to-device, D2D) link, or may be sent over a PC5 interface.

Optionally, the first message includes an identifier of the first sensing device.

Optionally, the first message may further include information such as a shape and a size of the target object.

Optionally, the second sensing requirement information may indicate a requirement that sensing measurement performed on the target object meets.

Optionally, the requirement that sensing measurement performed on the target object meets may include a sensing capability requirement. Correspondingly, the second sensing requirement information includes sensing capability requirement information indicating the sensing capability requirement.

Optionally, the sensing capability requirement information indicates a type of a sensing capability that needs to be supported (or possessed), and/or a size of a sensing area (or a sensing range) that needs to be supported.

For example, the sensing capability requirement information may include information indicating a sensing capability type requirement. For example, if the sensing capability requirement information indicates a first sensing mode, it indicates that a sensing device used to perform sensing measurement on the target object needs to support the first sensing mode. If the sensing capability requirement information indicates a second sensing mode, it indicates that the sensing device used to perform sensing measurement on the target object needs to support the second sensing mode. If the sensing capability requirement information indicates a third sensing mode, it indicates that the sensing device used to perform sensing measurement on the target object needs to support the third sensing mode. If the sensing capability requirement information indicates a fourth sensing mode, it indicates that the sensing device used to perform sensing measurement on the target object needs to support the fourth sensing mode. If the sensing capability requirement information indicates a first sensing mode and a second sensing mode, it indicates that the sensing device used to perform sensing measurement on the target object needs to support the first sensing mode and the second sensing mode.

For another example, the sensing capability requirement information may include information indicating a size of a sensing area. Only a sensing device with a size of a sensing area greater than or equal to an area size indicated by the information meets a requirement for performing sensing measurement on the target object.

Optionally, the requirement that sensing measurement performed on the target object meets may include a sensing measurement precision requirement. Correspondingly, the second sensing requirement information may include sensing measurement precision information indicating a sensing measurement precision requirement, to indicate precision required for performing sensing measurement on the target object.

A distance between a sensing device and the target object may affect sensing measurement precision. Therefore, in a possible implementation, a sensing measurement precision requirement is also referred to as a requirement for a distance between the sensing device and the target object. For example, the sensing measurement precision information may be specifically a distance threshold between the sensing device and the target object. Correspondingly, if a distance between a sensing device that receives the first message and the target object is less than or equal to the distance threshold, a distance requirement between the sensing device and the target object is met.

Because signal strength received by the sensing device may affect sensing measurement precision, in a possible implementation, the sensing measurement precision information may be specifically a signal strength threshold, for example, a received power threshold. Correspondingly, if the sensing device that receives the first message determines that received signal strength of the first message is greater than or equal to the signal strength threshold, the requirement is met.

In a possible implementation, the sensing capability requirement information and/or the sensing measurement precision information may be from the first sensing measurement request message received by the first terminal device. That is, the first sensing measurement request message may include the sensing capability requirement information and/or the sensing measurement precision information.

It should be understood that the second sensing requirement information may include one or more of the sensing capability requirement information and the sensing measurement precision information.

In a possible implementation, when the target object moves to a first location, it indicates that the first sensing device meets a sensing measurement termination condition, and the first sensing device sends the first message. For related descriptions of "the target object moves to a first location", refer to related content in the procedure shown in FIG. 6.

Optionally, the sensing measurement termination condition includes one or more of the following: received power of the target object for a sensing signal is less than a threshold; or the target object moves out of or is about to move out of the sensing area.

Optionally, the first sensing measurement request message received by the first sensing device includes the sensing measurement termination condition, so that the first sensing device may send, based on the sensing measurement termination condition, the first message when determining that the condition is met.

Step 704: The first sensing device receives first response messages from N sensing devices for sensing the target object, where N is an integer greater than or equal to 1.

Optionally, the first response message includes an identifier of a sensing device that sends the first response message.

Optionally, the first response message may further include location information of the sensing device that sends the first response message. The location information may be absolute location information of the sensing device, or may be location information of the sensing device relative to the target object, for example, a distance between the sensing device and the target object.

Optionally, the first response message may further include sensing capability information of the sensing device that sends the first response message.

In a possible implementation, if the first message does not include the sensing capability requirement information or the sensing measurement precision information, a terminal device that receives the first message determines, based on the location information of the target object, that the target object is in a sensing area of the terminal device, and in this case, may return the first response message to the first sensing device. In other words, all the N sensing devices that return the first response message may perform sensing measurement on the target object.

In a possible implementation, if the first message includes the sensing capability requirement information but does not include the sensing measurement precision information, the terminal device that receives the first message determines that the target object is in the sensing area of the terminal device, and determines, based on a sensing capability requirement indicated by the sensing capability requirement information in the first message, that the terminal device meets the sensing capability requirement indicated by the sensing capability requirement information; and in this case, sends the first response message to the first sensing device; or otherwise, the terminal device does not send the response message to the first sensing device. In other words, all the N sensing devices that return the first response message may perform sensing measurement on the target object, and meet the sensing capability requirement indicated by the sensing capability requirement information.

For example, the terminal device receives the first message, where the first message includes the sensing capability requirement information, the sensing capability requirement information is specifically information indicating a sensing capability type requirement, and the information indicates a first sensing mode. If the terminal device supports the first sensing mode, and the target object is in a sensing area of the terminal device, the terminal device sends the first response message to the first sensing device; otherwise, the terminal device does not send the first response message to the first sensing device.

For another example, the terminal device receives the first message, where the first message includes the sensing capability requirement information, and the sensing capability requirement information is specifically information indicating a sensing area size requirement. If a size of the sensing area of the terminal device is greater than or equal to a size indicated by the information, and the target object is in the sensing area of the terminal device, the terminal device sends the first response message to the first sensing device; otherwise, the terminal device does not send the first response message to the first sensing device.

For another example, the terminal device receives the first message, where the first message includes the sensing capability requirement information, and the sensing capability requirement information includes information indicating a sensing capability type requirement and information indicating a sensing area size requirement. If the terminal device determines, based on the sensing capability requirement information, that a sensing mode type and a sensing area size supported by the terminal device meet the requirements, and the target object is in the sensing area of the terminal device, the terminal device sends the first response message to the first sensing device; otherwise, the terminal device does not send the first response message to the first sensing device.

In a possible implementation, if the first message includes the sensing measurement precision information but does not include the sensing capability requirement information, the terminal device that receives the first message determines, based on the sensing measurement precision information in the first message, whether the terminal device meets the sensing measurement precision requirement, and if the terminal device meets the sensing measurement precision requirement and the target object is in the sensing area of the terminal device, the terminal device sends the first response message to the first sensing device; otherwise, the terminal device does not send the response message to the first sensing device. In other words, the N sensing devices that return the first response message all meet the sensing measurement precision requirement indicated by the sensing measurement precision information, and the target object is in the sensing area of the terminal device.

For example, the terminal device receives the first message, where the first message includes the location information of the target object and the sensing measurement precision information (which is specifically a distance threshold between the sensing device and the target object). If the terminal device determines, based on the location information of the target object, that the target object is in the sensing area of the terminal device, and a distance between the sensing device and the target object is less than or equal to the distance threshold, the terminal device sends the first response message to the first sensing device; otherwise, the terminal device does not send the first response message to the first sensing device.

For another example, the terminal device receives the first message, where the first message includes the sensing measurement precision information (which is specifically a signal strength threshold). If the target object is in the sensing area of the terminal device, and the terminal device determines that received signal strength of the first message is greater than or equal to the signal strength threshold, the terminal device sends the first response message to the first sensing device; otherwise, the terminal device does not send the first response message to the first sensing device.

In a possible implementation, if the first message includes the sensing capability requirement information and the sensing measurement precision information, and if the terminal device that receives the first message determines the target object is in the sensing area of the terminal device, and the terminal device meets a sensing capability requirement indicated by the sensing capability requirement information and meets a sensing measurement precision requirement indicated by the sensing measurement precision information, the terminal device sends the first response message to the first sensing device; otherwise, the terminal device does not send the response message to the first sensing device. In other words, the N sensing devices that return the first response message meet the sensing capability requirement indicated by the sensing capability requirement information and meet the sensing measurement precision requirement indicated by the sensing measurement precision information, and the target object is in the sensing area of the sensing device.

Because the first message includes the sensing capability requirement information and/or the sensing measurement precision information, only terminal devices that meet a corresponding requirement return the first response message, so that the first sensing device selects the target sensing device from the terminal devices, thereby improving sensing measurement performance.

Step 705: The first sensing device selects a second sensing device from the N sensing devices that return the first response message.

In a possible implementation, the first sensing device selects the second sensing device from the N sensing devices based on sensing capability information of the N sensing devices.

Optionally, the first response message sent by the sensing device includes sensing capability information of the sensing device. The first sensing device may select the second sensing device from the N sensing devices based on the sensing capability information of the N sensing devices, for example, select a sensing device with a strong sensing capability. Alternatively, the first sensing device may select, from the N sensing devices based on a sensing capability requirement indicated by sensing capability requirement information (this information is from the first sensing measurement request message received by the first sensing device) and the sensing capability information of the N sensing devices, a sensing device that meets this condition (or requirement).

In a possible implementation, the first sensing device selects the second sensing device from the N sensing devices based on location information of the N sensing devices.

Optionally, the first response message sent by the sensing device includes location information of the sensing device. The first sensing device may select, from the N sensing devices based on the location information of the N sensing devices, a sensing device closest to the target object.

In a possible implementation, the first sensing device selects the second sensing device from the N sensing devices based on the sensing capability information and the location information of the N sensing devices.

In a possible implementation, after selecting the second sensing device from the N sensing devices, the first sensing device may further send a notification message to the first core network element, where the notification message includes an identifier of the second sensing device, to notify the first core network element of the identifier of the reselected sensing device.

Step 706: The first sensing device sends a second sensing measurement request message to the second sensing device, where the second sensing measurement request message is used to request the second sensing device to perform sensing measurement on the target object.

Optionally, the second sensing measurement request message may include information about the target object, for example, information such as location information of the target object, a shape of the target object, and a size of the target object.

After receiving the second sensing measurement request message, the second sensing device performs sensing measurement on the target object to obtain sensing data, and sends the sensing data to the first core network element. The second sensing device may perform sensing measurement on the target object based on a specified period, and send the sensing data to the second sensing device.

Optionally, the second sensing device may directly send the sensing data to the first core network element, or may send the sensing data to the first core network element through a core network element (for example, an AMF network element) serving the second sensing device.

The first core network element may determine the location or the moving track of the target object based on the sensing data from the second sensing device. Further, the first core network element may send a location or a moving track of the target object to a second core network element.

In a possible implementation, after receiving the second sensing measurement request message, the second sensing device may further send a notification message to the first core network element, where the notification message includes the identifier of the second sensing device, to notify the first core network element of the identifier of the reselected sensing device.

In the foregoing embodiment of this application, when relative motion between the target object and a sensing device currently performing sensing measurement prevents the sensing device from continuing the sensing measurement on the target object, thereby requiring a new sensing device to be selected, the sensing device may obtain a candidate sensing device based on a discovery mechanism, so that the new sensing device may be selected from the candidate sensing device to replace an original sensing device, to continue to perform sensing measurement on the target object. In this way, continuity of a sensing service is implemented.

In addition, when selecting a target sensing device from the candidate sensing device, the sensing device may select an appropriate sensing device based on sensing capability information and/or location information of the candidate sensing device, thereby improving sensing measurement performance.

To better understand the foregoing embodiments of this application, the following separately describes the procedures shown in FIG. 6 and FIG. 7 with reference to several application scenarios.

### Example I

In Example I, a specific implementation process of the method shown in FIG. 6 is described by using the system architecture shown in FIG. 4 or FIG. 5 as an example. A first core network element is an SF, a second core network element is an AF, and a sensing device is a terminal device.

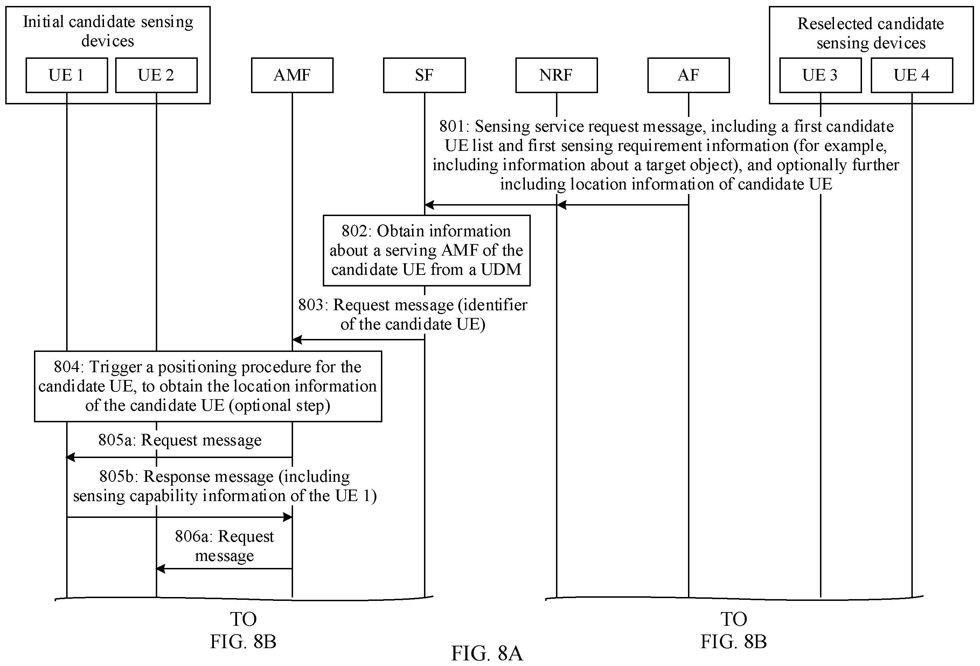

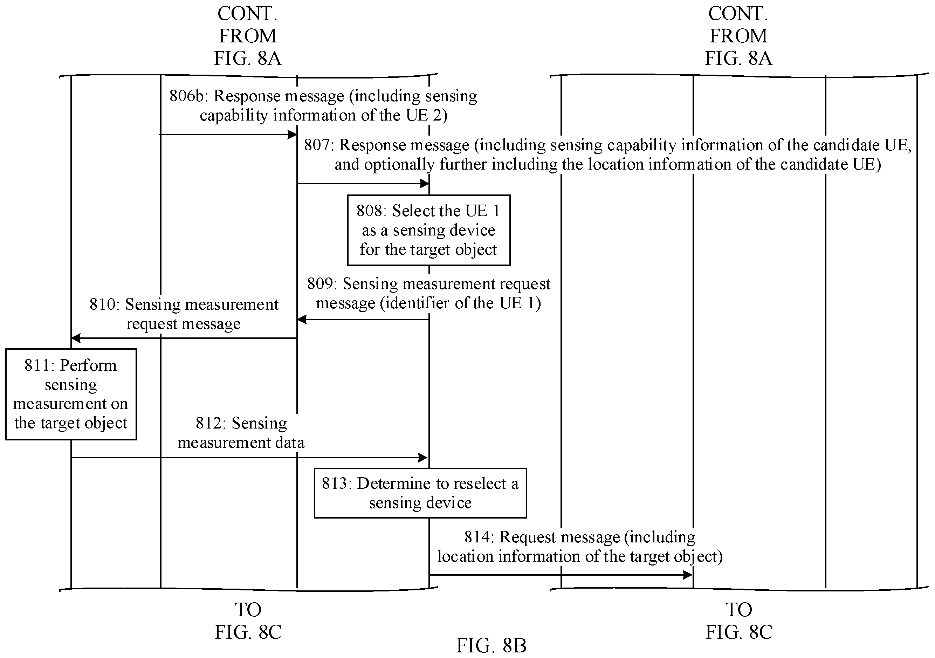

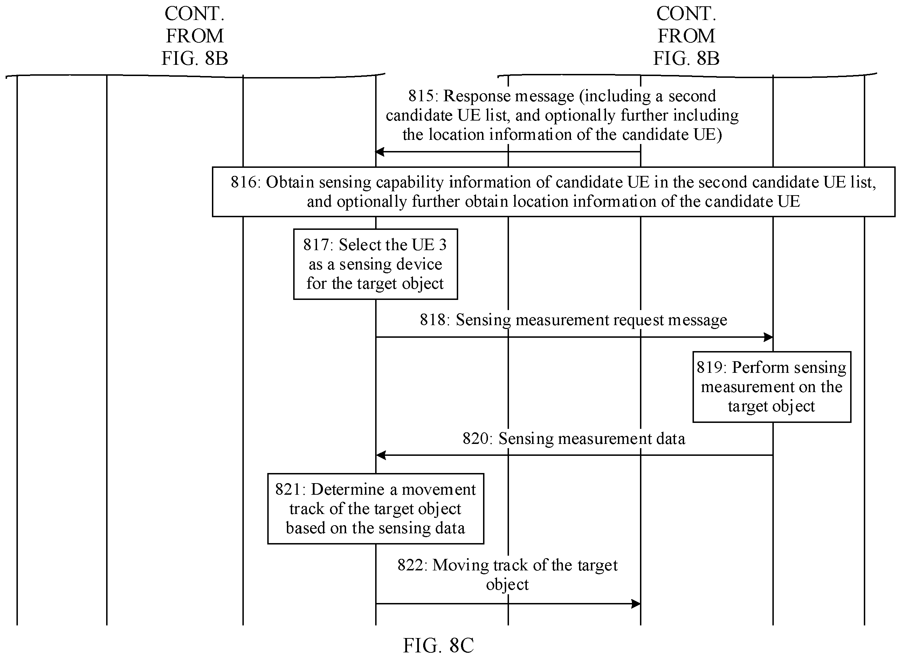

As shown in FIG. 8A, FIG. 8B, and FIG. 8C, the process may include the following steps.

Step 801: The AF sends a sensing service request message to the SF, where the sensing service request message includes a first candidate UE list and first sensing requirement information of a target object, and the first candidate UE list includes an identifier of candidate UE that performs sensing measurement on the target object.

This example is described by using an example in which the first candidate UE list includes an identifier of UE 1 and an identifier of UE 2, and the UE 1 and the UE 2 are candidate UEs that perform sensing measurement on the target object. Optionally, the identifier of the UE 1 and the identifier of the UE 2 are generic public subscription identities (generic public subscription identifiers, GPSIs).

Optionally, the first sensing requirement information may include one or more of the following: information about the target object and sensing measurement precision information. Optionally, the information about the target object may include one or more of the following: location information of the target object, a shape of the target object, a size of the target object, and the like. For related descriptions of the first sensing requirement information, refer to related content in the procedure shown in FIG. 6.

Optionally, the service request message may further include location information of candidate UE (including the UE 1 and the UE 2).

Optionally, the AF may send the service request message to the SF through an NEF.

Step 802: The SF obtains information about a serving AMF of the candidate UE from a UDM.

In this example, the SF may obtain, from the UDM, information about a serving AMF of the UE 1, and information about a serving AMF of the UE 2. The AMF of the UE 1 and the AMF of the UE 2 may be a same AMF or different AMFs. The UDM stores a correspondence between a GPSI and an AMF. Specifically, the SF sends the GPSI to the UDM, and the UDM queries locally stored AMF information based on the GPSI, and returns the AMF information to the SF. The AMF information includes identification information of an AMF.

Optionally, the SF may further obtain, based on a GPSI of each candidate UE, a subscription permanent identifier (subscription permanent identifier, SUPI) of the UE from the UDM. The UDM stores a mapping relationship between a GPSI and a SUPI.

Step 803: The SF sends a request message to the AMF of the candidate UE, where the request message carries the identifier of the candidate UE.

In a possible implementation, if the AMF of the UE 1 and the AMF of the UE 2 are different AMFs, the SF may separately send a request message to the serving AMF of the UE 1 and the serving AMF of the UE 2, where one request message carries the identifier of the UE 1 to request to obtain sensing capability information of the UE 1, and the other request message carries the identifier of the UE 2 to request to obtain sensing capability information of the UE 2.

In another possible implementation, if serving AMFs of the UE 1 and the UE 2 are a same AMF, the SF may send one request message to the serving AMF shared by the UE 1 and the UE 2, where the request message carries the identifiers of the UE 1 and the UE 2, to obtain sensing capability information of a plurality of candidate UEs by using the request message, thereby reducing signaling and reducing network resource overheads.

Optionally, the identifier of the candidate UE in the request message may be a SUPI of the candidate UE.

Step 804: After receiving the request message, the AMF triggers a positioning procedure for the candidate UE based on the identifier of the candidate UE carried in the request message, to obtain location information of the candidate UE.

Compared with location information of the candidate UE from the AF, the location information of the candidate UE obtained by using the positioning procedure is more accurate and precise. Therefore, based on the location information, UE that is more suitable for performing sensing measurement on the target object may be selected, thereby improving sensing measurement precision of the target object.

It should be understood that, if the candidate UE is in a radio resource control (radio resource control, RRC) idle state, a paging procedure may be used to enable the candidate UE to be in an RRC connected state.

It should be understood that this step is an optional step. In a possible implementation, if the request message sent by the SF in step 803 includes indication information indicating to obtain the location information of the UE (or includes indication information used to trigger the positioning procedure), the AMF triggers the positioning procedure for the candidate UE; otherwise, the AMF does not initiate the positioning procedure by default.

Step 805a: The serving AMF of the UE 1 sends a request message to the UE 1, to request to obtain the sensing capability information of the UE 1.

Optionally, the request message may be a downlink NAS message, and used to trigger a request for a sensing capability from the UE 1.

Step 805b: The UE 1 sends a response message to the serving AMF of the UE 1, where the response message carries the sensing capability information of the UE 1, for example, includes a sensing mode supported by the UE 1 and/or a sensing range of the UE 1.

Optionally, the response message may be an uplink NAS message, and used to return the sensing capability information.

Step 806a: The serving AMF of the UE 2 sends a request message to the UE 2, to request to obtain the sensing capability information of the UE 2.

Optionally, the request message may be a downlink NAS message, and used to trigger a request for a sensing capability from the UE 2.

Step 806b: The UE 2 sends a response message to the serving AMF of the UE 2, where the response message carries the sensing capability information of the UE 2, for example, includes a sensing mode supported by the UE 2 and/or a sensing range of the UE 2.

Optionally, the response message may be an uplink NAS message, and used to return the sensing capability information.

Step 807: The AMF sends a response message to the SF, where the response message carries the identifier of the candidate UE and the sensing capability information of the candidate UE, and optionally may further carry the location information of the candidate UE.

In this step, the serving AMF of the UE 1 sends a response message to the SF, where the response message carries the sensing capability information of the UE 1, and optionally further carries location information of the UE 1. The serving AMF of the UE 2 sends a response message to the SF, where the response message carries the sensing capability information of the UE 2, and optionally further carries location information of the UE 2.

Optionally, if the serving AMF of the UE 1 is the same as the serving AMF of the UE 2, the AMF may send a response message to the SF, where the response message carries the sensing capability information of the UE 1 and the sensing capability information of the UE 2, and optionally, may further carry the location information of the UE 1 and the location information of the UE 2, thereby reducing signaling and reducing network resource overheads.

Step 808: The SF selects the UE 1 from candidate UE in the first candidate UE list as a target sensing device.

In a possible implementation, the SF may select, based on sensing capability information of each candidate UE in the first candidate UE list, one UE from the first candidate UE list as a sensing device that performs sensing measurement on the target object. For example, if a sensing capability of the UE 1 is stronger than a sensing capability of the UE 2 (for example, the sensing range of the UE 1 is greater than the sensing range of the UE 2, or the UE 1 supports a first sensing mode and the UE 2 does not support the first sensing mode), the UE 1 is selected as the target sensing device. For related descriptions of the first sensing mode, refer to the foregoing related content.

In another possible implementation, the SF may select, based on the sensing capability information of each candidate UE in the first candidate UE list and a distance between each candidate UE and the target object, one UE from the first candidate UE list as the sensing device that performs sensing measurement on the target object. For example, if the UE 1 and the UE 2 have a same sensing capability, and a distance between the UE 1 and the target object is less than a distance between the UE 2 and the target object, the UE 1 may be selected as the target sensing device. For another example, if the UE 1 and the UE 2 have a same distance from the target object, and a sensing capability of the UE 1 is stronger than that of the UE 2, the UE 1 may be selected as the target sensing device.

Step 809: The SF sends a sensing measurement request message to the serving AMF of the UE 1, where the sensing measurement request message carries the identifier of the UE 1.

Optionally, the sensing measurement request message may further include the information about the target object, for example, the current location information, the size, and the shape of the target object. The information about the target object may be obtained by the SF from the sensing service request message received in step 801.

Optionally, the sensing measurement request message may further include indication information, where the indication information indicates the UE 1 to activate sensing measurement in a full range that can be sensed by the UE.

Optionally, the sensing measurement request message may further include a sensing measurement termination condition. For example, the condition may be as follows: When the UE 1 performs sensing measurement, power of a sensing signal reaching the target object is less than a specified threshold; or the target object moves out of or is about to move out of the sensing range of the UE 1 (for example, an area in which the target object is currently located is at an edge of a range that can be sensed by the UE 1). The UE 1 may stop performing sensing measurement on the target object when the condition is met.

Step 810: The serving AMF of the UE 1 sends the sensing measurement request message to the UE 1 based on the identifier of the UE 1 in the received sensing measurement request message.

It should be understood that in steps 809 and 810, the SF may directly interact with the UE 1 without using the serving AMF of the UE 1.

Step 811: The UE 1 performs sensing measurement on the target object.

Step 812: The UE 1 sends sensing data obtained through measurement to the SF through the serving AMF of the UE 1.

It should be understood that the UE 1 may directly send the sensing data to the SF without using the serving AMF of the UE 1.

It should be understood that steps 811 and 812 may be performed a plurality of times, that is, the UE 1 may perform sensing measurement a plurality of times and report the sensing data a plurality of times.

Step 813: The SF determines that the target object moves to a first location, or that the UE 1 meets the sensing measurement termination condition, or that a condition for reselecting a sensing device for the target object is met currently, or that the SF determines to reselect a sensing device.

Optionally, the SF may determine, based on the sensing data from the UE 1, whether to trigger reselection of a sensing device.

Optionally, when determining that one or more of the following conditions are met, the SF may trigger reselection of a sensing device:
Condition 1: If the target object moves out of or is about to move out of a sensing area of the UE 1. For example, the target object is currently located at an edge of the sensing area of the UE 1.
Condition 2: The power of the sensing signal reaching the target object is less than the specified threshold.
Condition 3: The SF receives indication information from the UE 1, where the indication information indicates that the UE 1 meets the sensing measurement termination condition. When the UE 1 meets the sensing measurement termination condition, the UE 1 sends the indication information to the SF.

Step 814: The SF sends a request message to the AF, where the request message carries the location information of the target object and is used to request to obtain a candidate UE list used for the target object.

The location information of the target object is the current location information of the target object, and is determined by the SF based on sensing data reported by a first sensing device.

Optionally, the SF may send the request message to the AF through an NEF.

Step 815: After receiving the request message, the AF sends a response message to the SF, where the response message carries a second candidate UE list, and the second candidate UE list includes an identifier of candidate UE that performs sensing measurement on the target object.

This example is described by using an example in which the second UE list includes an identifier of UE 3 and an identifier of UE 4, and the UE 3 and the UE 4 are candidate UEs that perform sensing measurement on the target object. Optionally, the identifier of the UE 3 and the identifier of the UE 4 are GPSIs.

Optionally, the response message may further include location information of the candidate UE (including UE 3 and UE 4).

Optionally, the AF may send the service request message to the SF through an NEF.

Step 816: The SF obtains sensing capability information of candidate UE in the second candidate UE list, and optionally, may further obtain location information of the candidate UE.

For a specific implementation of this step, refer to step 804 to step 807.

Step 817: The SF selects the UE 3 from the candidate UE in the second candidate UE list as a sensing device.

For a specific implementation of selecting the sensing device by the SF, refer to step 808.

Step 818: The SF sends a sensing measurement request message to the UE 3.

Optionally, the sensing measurement request message may further include the information about the target object, for example, the current location information, the size, and the shape of the target object.

Optionally, the sensing measurement request message may further include indication information, where the indication information indicates the UE 3 to activate sensing measurement in a full range that can be sensed by the UE.

Optionally, the sensing measurement request message may further include a sensing measurement termination condition.

It should be understood that the SF may send the sensing measurement request message to the UE 3 through a serving AMF of the UE 3, or may directly send the sensing measurement request message to the UE 3.

Step 819: The UE 3 performs sensing measurement on the target object.

Step 820: The UE 3 sends sensing data obtained through measurement to the SF through the serving AMF of the UE 3.

It should be understood that the UE 3 may directly send the sensing data to the SF without using the serving AMF of the UE 3.

It should be understood that steps 819 and 820 may be performed a plurality of times, that is, the UE 3 may perform sensing measurement a plurality of times and report the sensing data a plurality of times.

Step 821: The SF aggregates sensing data received a plurality of times, to generate a continuous movement track of the target object.

Step 822: The SF sends the movement track of the target object to the AF.

It should be understood that a time sequence relationship of steps in the procedure shown in FIG. 8A, FIG. 8B, and FIG. 8C is merely a possible example. This is not limited in this application.

For a specific implementation of the foregoing steps in the procedure shown in FIG. 8A, FIG. 8B, and FIG. 8C, refer to related content in the procedure shown in FIG. 6.

It should be understood that FIG. 8A, FIG. 8B, and FIG. 8C are merely an example, in the foregoing scenario, of the procedure shown in FIG. 6. This is not limited in this application.

### Example II

In Example II, another specific implementation process of the method shown in FIG. 6 is described by using the system architecture shown in FIG. 4 or FIG. 5 as an example. A first core network element is an SF, a second core network element is an AF, and a sensing device is a terminal device.

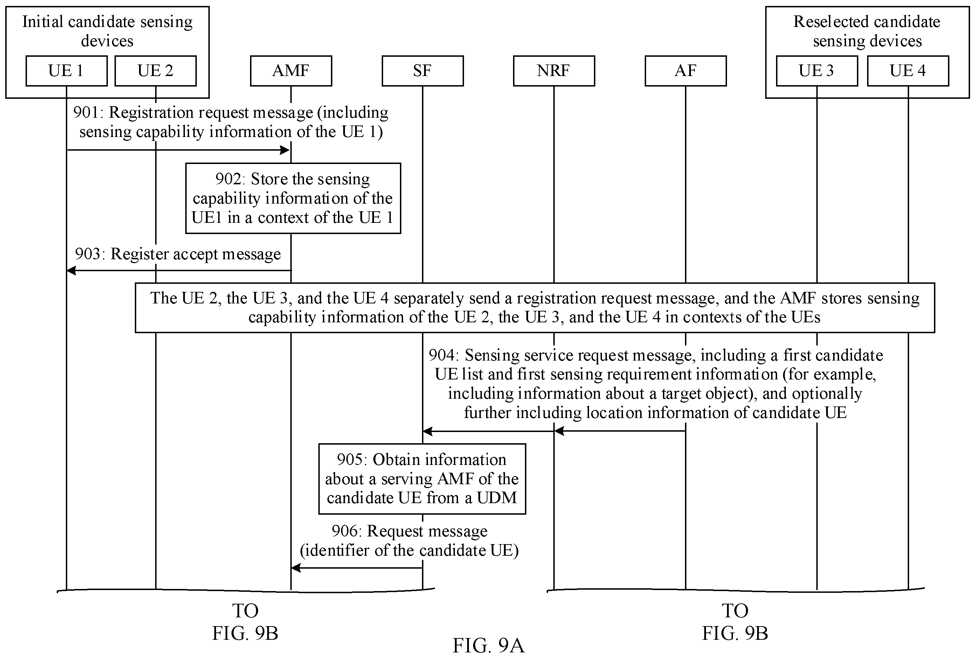

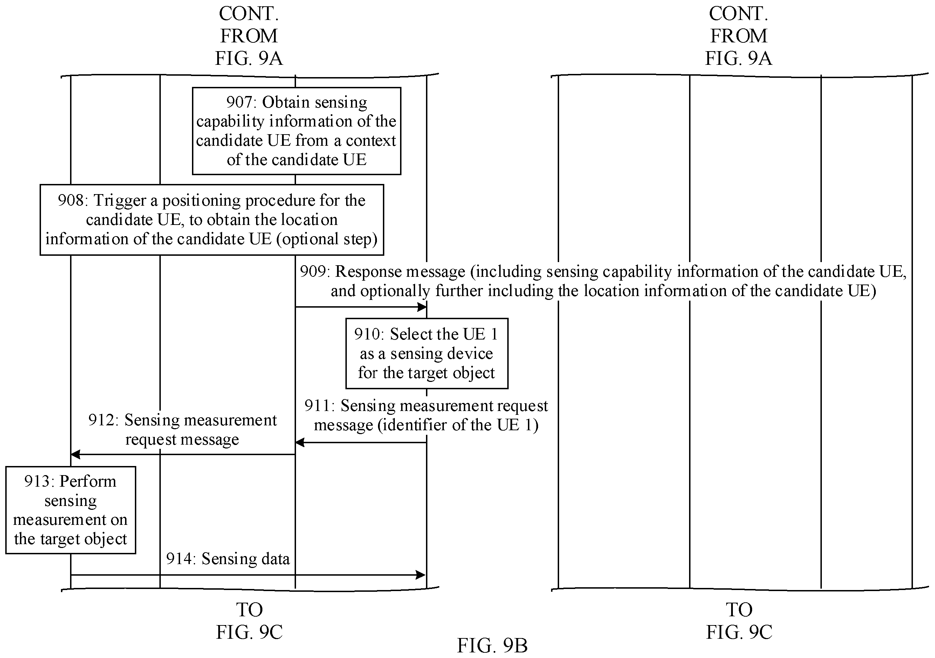

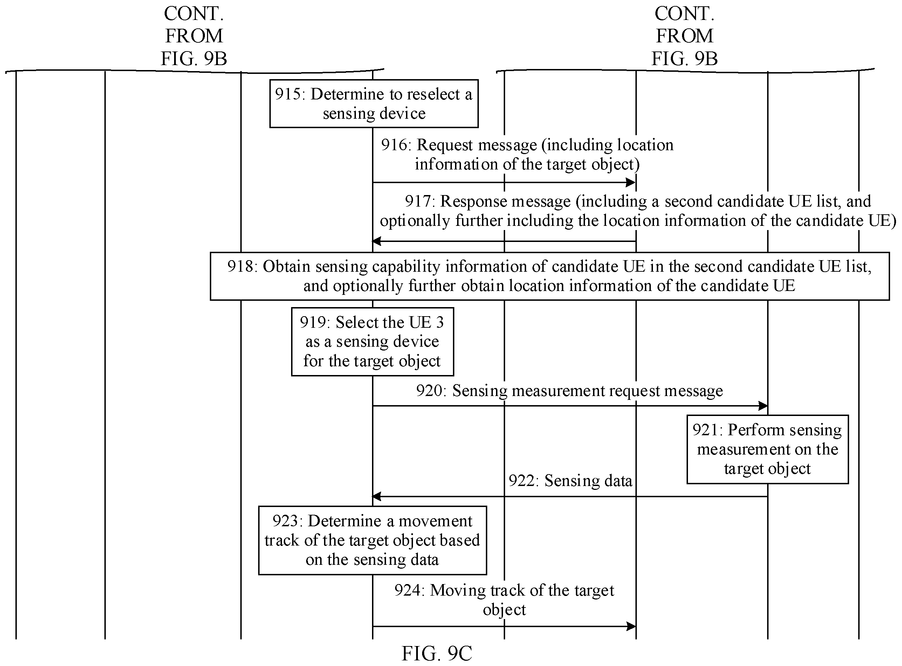

As shown in FIG. 9A, FIG. 9B, and FIG. 9C, the process may include the following steps.

Step 901: UE 1 sends a registration request message to a serving AMF, where the registration request message carries an identifier of the UE 1 and sensing capability information of the UE 1.

Step 902: The AMF stores the sensing capability information of the UE 1 in a context of the UE 1.

Step 903: The AMF sends a registration accept message to the UE 1.

UE 2, UE 3, and UE 4 separately send a registration request message, and the AMF stores sensing capability information of the UE 2, the UE 3, and the UE 4 in contexts of the UEs. For a specific implementation process, refer to the registration procedure of the UE 1.

Step 904: The AF sends a sensing service request message to the SF, where the sensing service request message includes a first candidate UE list and first sensing requirement information of a target object, and the first candidate UE list includes an identifier of candidate UE that performs sensing measurement on the target object. The first sensing requirement information may include information about the target object (for example, information such as the location, shape, and size of the target object) and/or sensing measurement precision information. For a specific implementation of this step, refer to step 801 in FIG. 8A, FIG. 8B, and FIG. 8C.

Step 905: The SF obtains information about a serving AMF of the candidate UE from a UDM. For a specific implementation of this step, refer to step 802 in FIG. 8A, FIG. 8B, and FIG. 8C.

Step 906: The SF sends a request message to the AMF of the candidate UE, where the request message carries the identifier of the candidate UE. For a specific implementation of this step, refer to step 803 in FIG. 8A, FIG. 8B, and FIG. 8C.

Step 907: After receiving the request message, the AMF obtains, based on the identifier of the candidate UE carried in the request message, sensing capability information of the candidate UE from a context of corresponding UE.

Step 908: After receiving the request message, the AMF triggers a positioning procedure for the candidate UE based on the identifier of the candidate UE carried in the request message, to obtain location information of the candidate UE. For a specific implementation of this step, refer to step 804 in FIG. 8A, FIG. 8B, and FIG. 8C.

It should be understood that this step is an optional step. In a possible implementation, if the request message sent by the SF in step 906 includes indication information indicating to obtain the location information of the UE (or includes indication information used to trigger the positioning procedure), the AMF triggers the positioning procedure for the candidate UE; otherwise, the AMF does not initiate the positioning procedure by default.

Step 909: The AMF sends a response message to the SF, where the response message carries the identifier of the candidate UE and the sensing capability information of the candidate UE, and optionally may further carry the location information of the candidate UE. For a specific implementation of this step, refer to step 807 in FIG. 8A, FIG. 8B, and FIG. 8C.

Step 910: The SF selects the UE 1 from candidate UE in the first candidate UE list as a target sensing device. For a specific implementation of this step, refer to step 808 in FIG. 8A, FIG. 8B, and FIG. 8C.

Step 911: The SF sends a sensing measurement request message to the serving AMF of the UE 1, where the sensing measurement request message carries the identifier of the UE 1. For a specific implementation of this step, refer to step 809 in FIG. 8A, FIG. 8B, and FIG. 8C.

Step 912: The serving AMF of the UE 1 sends the sensing measurement request message to the UE 1 based on the identifier of the UE 1 in the received sensing measurement request message.

It should be understood that in steps 809 and 810, the SF may directly interact with the UE 1 without using the serving AMF of the UE 1.

Step 913: The UE 1 performs sensing measurement on the target object.

Step 914: The UE 1 sends sensing data obtained through measurement to the SF through the serving AMF of the UE 1.

It should be understood that the UE 1 may directly send the sensing data to the SF without using the serving AMF of the UE 1.

It should be understood that steps 811 and 812 may be performed a plurality of times, that is, the UE 1 may perform sensing measurement a plurality of times and report the sensing data a plurality of times.

Step 915: The SF determines that the target object moves to a first location, or that the UE 1 meets the sensing measurement termination condition, or that a condition for reselecting a sensing device for the target object is met currently, or that the SF determines to reselect a sensing device.

Step 916: The SF sends a request message to the AF, where the request message carries the location information of the target object and is used to request to obtain a candidate UE list used for the target object. The location information of the target object is the current location information of the target object, and is determined by the SF based on sensing data reported by a first sensing device.

Optionally, the SF may send the request message to the AF through an NEF.

Step 917: After receiving the request message, the AF sends a response message to the SF, where the response message carries a second candidate UE list, and the second candidate UE list includes an identifier of candidate UE that performs sensing measurement on the target object.

Step 918: The SF obtains sensing capability information of candidate UE in the second candidate UE list, and optionally, may further obtain location information of the candidate UE.

Step 919: The SF selects the UE 3 from the candidate UE in the second candidate UE list as a sensing device.

Step 920: The SF sends a sensing measurement request message to the UE 3.

Step 921: The UE 3 performs sensing measurement on the target object.

Step 922: The UE 3 sends sensing data obtained through measurement to the SF through the serving AMF of the UE 3.

Step 923: The SF aggregates sensing data received a plurality of times, to generate a continuous movement track of the target object.

Step 924: The SF sends the movement track of the target object to the AF.

In the procedure shown in FIG. 9A, FIG. 9B, and FIG. 9C, for a specific implementation of step 915 to step 924, refer to step 813 to step 822 in the procedure shown in FIG. 8A, FIG. 8B, and FIG. 8C.

In this procedure, UE may register sensing capability information into a context of the UE by using a registration procedure. In this way, when obtaining the sensing capability of the candidate UE, the AMF may directly obtain the sensing capability information from the context of the UE without interacting with the candidate UE, thereby reducing signaling overheads.

It should be understood that a time sequence relationship of steps in the procedure shown in FIG. 9A, FIG. 9B, and FIG. 9C are merely a possible example. This is not limited in this application.

For a specific implementation of the foregoing steps in the procedure shown in FIG. 9A, FIG. 9B, and FIG. 9C, refer to related content in the procedure shown in FIG. 6.

It should be understood that FIG. 9A, FIG. 9B, and FIG. 9C are merely an example, in the foregoing scenario, of the procedure shown in FIG. 6. This is not limited in this application.

### Example III

In Example III, a specific implementation process of the method shown in FIG. 7 is described by using the system architecture shown in FIG. 4 or FIG. 5 as an example. A first core network element is an SF, a second core network element is an AF, and a sensing device is a terminal device.

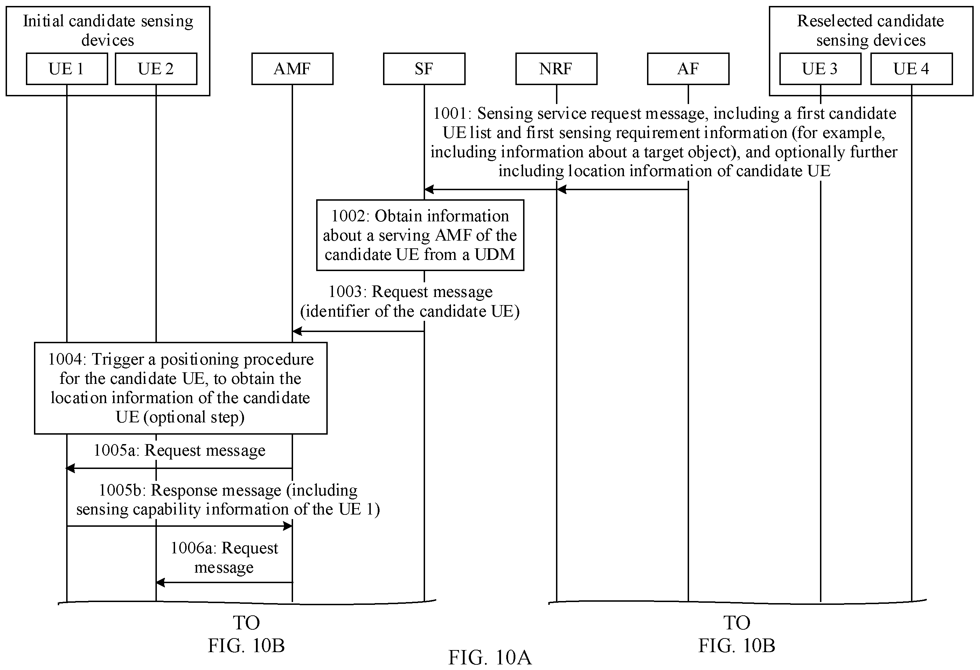

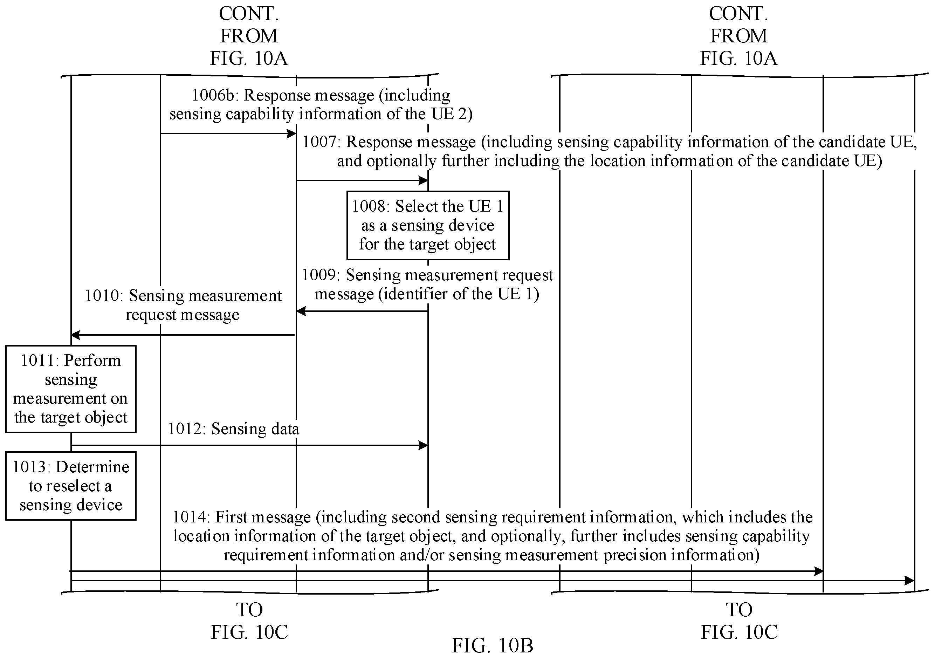

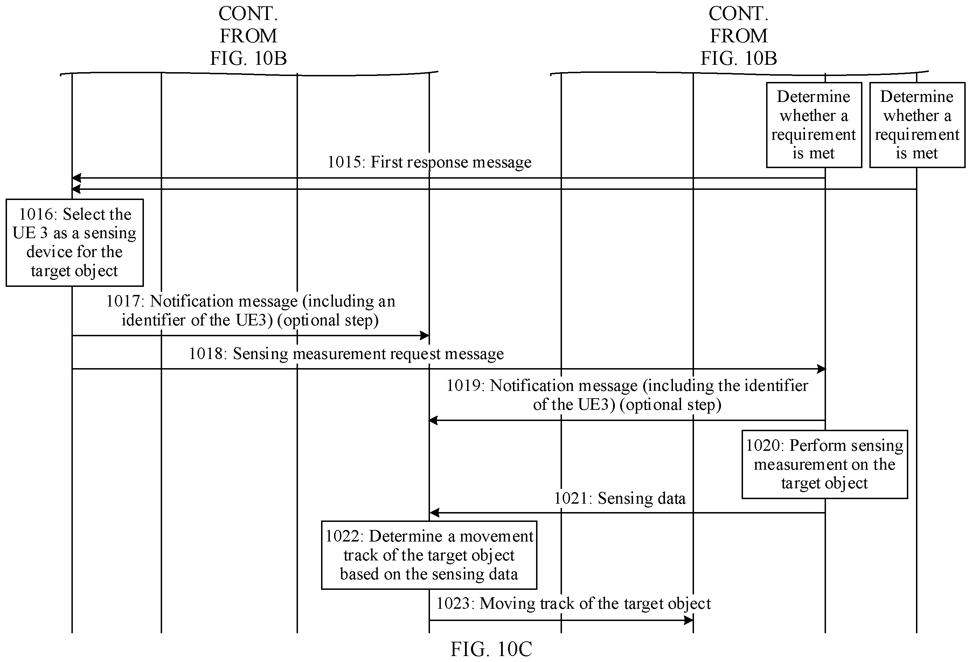

As shown in FIG. 10A, FIG. 10B, and FIG. 10C, the process may include the following steps.

Step 1001: The AF sends a sensing service request message to the SF, where the sensing service request message includes a first candidate UE list and first sensing requirement information of a target object, and the first candidate UE list includes an identifier of candidate UE that performs sensing measurement on the target object. The first sensing requirement information may include information about the target object (for example, information such as the location, shape, and size of the target object) and/or sensing measurement precision information.

Step 1002: The SF obtains information about a serving AMF of the candidate UE from a UDM.

Step 1003: The SF sends a request message to the AMF of the candidate UE, where the request message carries the identifier of the candidate UE.

Step 1004: After receiving the request message, the AMF triggers a positioning procedure for the candidate UE based on the identifier of the candidate UE carried in the request message, to obtain location information of the candidate UE.

Step 1005a: A serving AMF of UE 1 sends a request message to the UE 1, to request to obtain sensing capability information of the UE 1.

Step 1005b: The UE 1 sends a response message to the serving AMF of the UE 1, where the response message carries the sensing capability information of the UE 1, for example, includes a sensing mode supported by the UE 1 and/or a sensing range of the UE 1.

Step 1006a: A serving AMF of UE 2 sends a request message to the UE 2, to request to obtain sensing capability information of the UE 2.

Step 1006b: The UE 2 sends a response message to the serving AMF of the UE 2, where the response message carries the sensing capability information of the UE 2, for example, includes a sensing mode supported by the UE 2 and/or a sensing range of the UE 2.

Step 1007: The AMF sends a response message to the SF, where the response message carries the identifier of the candidate UE and sensing capability information of the candidate UE, and optionally may further carry the location information of the candidate UE.

Step 1008: The SF selects the UE 1 from candidate UE in the first candidate UE list as a target sensing device.

Step 1009: The SF sends a sensing measurement request message to the serving AMF of the UE 1, where the sensing measurement request message carries an identifier of the UE 1.

Step 1010: The serving AMF of the UE 1 sends the sensing measurement request message to the UE 1 based on the identifier of the UE 1 in the received sensing measurement request message.

Step 1011: The UE 1 performs sensing measurement on the target object.

Step 1012: The UE 1 sends sensing data obtained through measurement to the SF through the serving AMF of the UE 1.

For a specific implementation of step 1001 to step 1012, refer to step 801 to step 812 in FIG. 8A, FIG. 8B, and FIG. 8C.

Step 1013: The UE 1 determines that the target object moves to a first location, or that the UE 1 meets the sensing measurement termination condition, or that a condition for reselecting a sensing device for the target object is met currently, or that the UE 1 determines to reselect a sensing device.

Optionally, the UE 1 may determine, based on sensing measurement on the target object, whether to trigger reselection of a sensing device.

Optionally, when determining that one or more of the following conditions are met, the UE 1 may trigger reselection of a sensing device:
Condition 1: If the target object moves out of or is about to move out of a sensing area of the UE 1. For example, the target object is currently located at an edge of the sensing area of the UE 1.
Condition 2: Power of a sensing signal reaching the target object is less than a specified threshold.

Step 1014: The UE 1 sends a first message, where the first message includes second sensing requirement information of the target object, and the second sensing requirement information includes the location information of the target object. Optionally, the second sensing requirement information further includes sensing capability requirement information and/or sensing measurement precision information.

Optionally, the first message is a broadcast message. For example, the first message is a discovery request message (discovery request message), and UE (for example, UE 3 and UE 4) around the UE 1 can receive the message.

Step 1015: The UE 3 and the UE 4 separately send a first response message to the UE 1.

Optionally, UE (for example, the UE 3 and the UE 4) that receives the first message determines, based on the location information of the target object, that the target object is in a sensing area of the UE, and sends the first response message.

Optionally, the UE (for example, the UE 3 and the UE 4) that receives the first message determines, based on the sensing capability requirement information and/or the sensing measurement precision information in the first message, whether the UE meets a corresponding requirement. If the corresponding requirement is met and the target object is in the sensing area of the UE, the UE sends the first response message to the UE 1; otherwise, the UE does not send the response message to a first sensing device.

In this example, the UE 3 and the UE 4 separately determine that the UE 3 and the UE 4 meet a requirement indicated by the sensing capability requirement information and/or a requirement indicated by the sensing measurement precision information, and that the target object is in the sensing area, and separately return the first response message to the UE 1.

Optionally, the first response message sent by the UE 3 may further include sensing capability information and/or location information of the UE 3, and the first response message sent by the UE 4 may include sensing capability information and/or location information of the UE 4.

Step 1016: The UE 1 selects the UE 3 as the target sensing device.

Optionally, the UE 1 may select the target sensing device based on the sensing capability information and/or the location information of the UE 3 and the UE 4. In this example, an example in which the UE 1 selects the UE 3 is used for description.

Step 1017: The UE 1 sends a notification message to the SF, where the notification message carries identification information of the UE 3, to notify the SF of the newly selected sensing device.

This step is optional.

Step 1018: The UE 1 sends a sensing measurement request message to the UE 3.

Step 1019: The UE 3 sends a notification message to the SF, where the notification message carries the identification information of the UE 3, to notify the SF of the newly selected sensing device.

This step is optional.

It should be understood that, if step 1017 is performed, step 1019 may be omitted; or if step 1019 is performed, step 1017 may be omitted.

Step 1020: The UE 3 performs sensing measurement on the target object.

Step 1021: The UE 3 sends sensing data obtained through measurement to the SF through a serving AMF of the UE 3.

Step 1022: The SF aggregates sensing data received a plurality of times, to generate a continuous movement track of the target object.

Step 1023: The SF sends the movement track of the target object to the AF.

It should be understood that a time sequence relationship of steps in the procedure shown in FIG. 10A, FIG. 10B, and FIG. 10C is merely a possible example. This is not limited in this application.

For a specific implementation of the foregoing steps in the procedure shown in FIG. 10A, FIG. 10B, and FIG. 10C, refer to related content in the procedure shown in FIG. 7.

It should be understood that FIG. 10A, FIG. 10B, and FIG. 10C are merely an example, in the foregoing scenario, of the procedure shown in FIG. 7. This is not limited in this application.

### Example IV

In Example II, another specific implementation process of the method shown in FIG. 7 is described by using the system architecture shown in FIG. 4 or FIG. 5 as an example. A first core network element is an SF, a second core network element is an AF, and a sensing device is a terminal device.

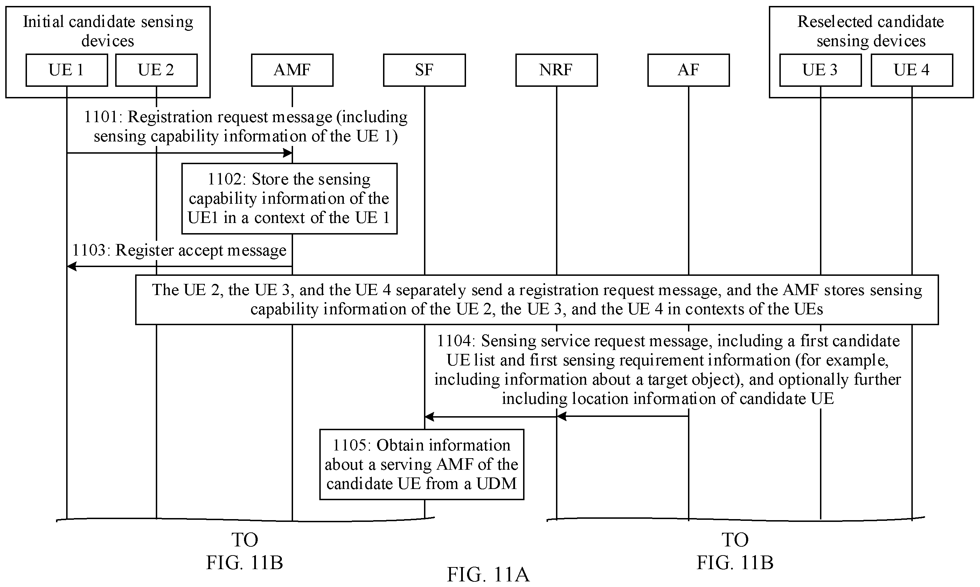

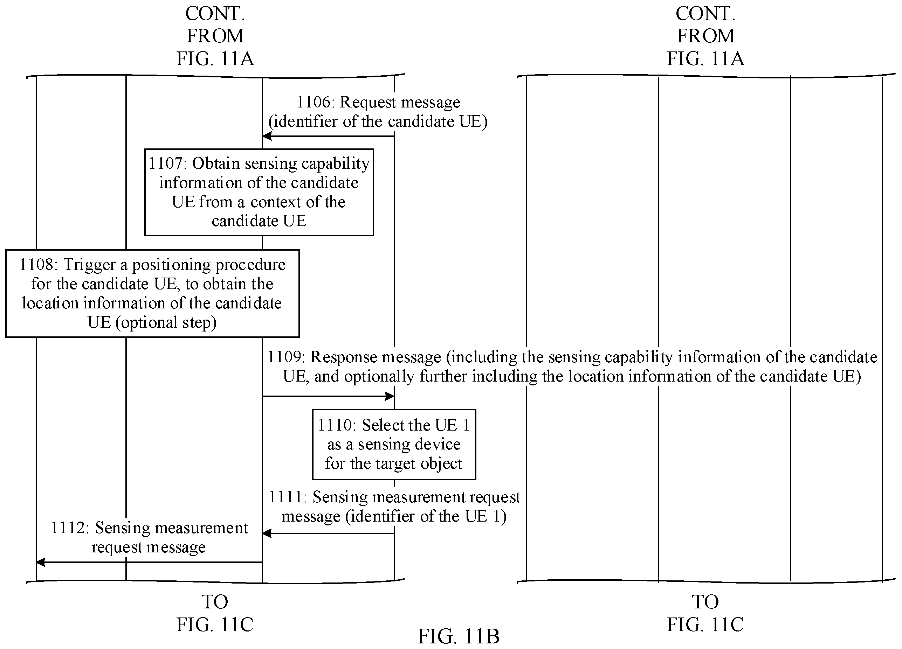

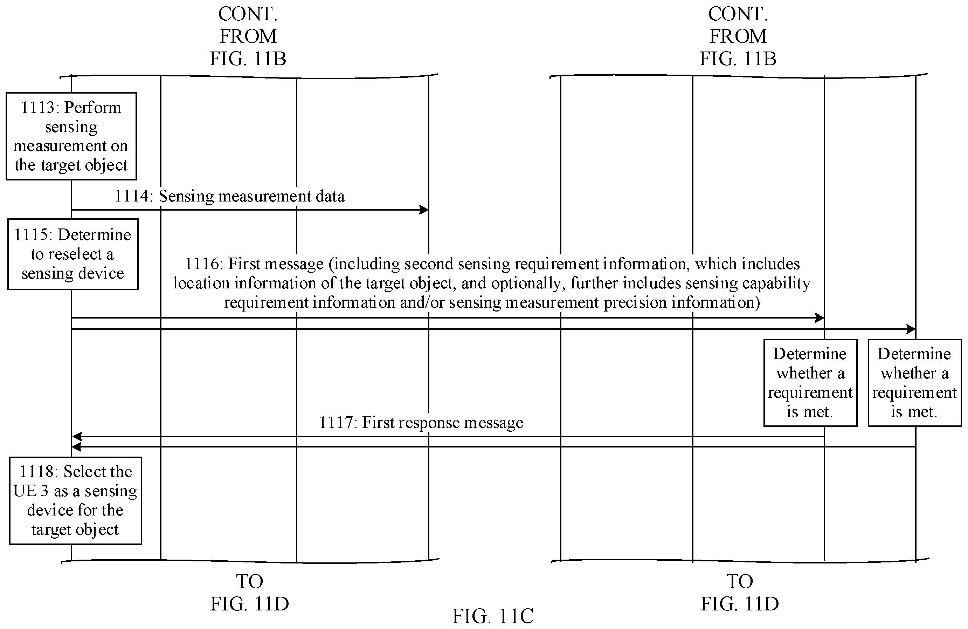

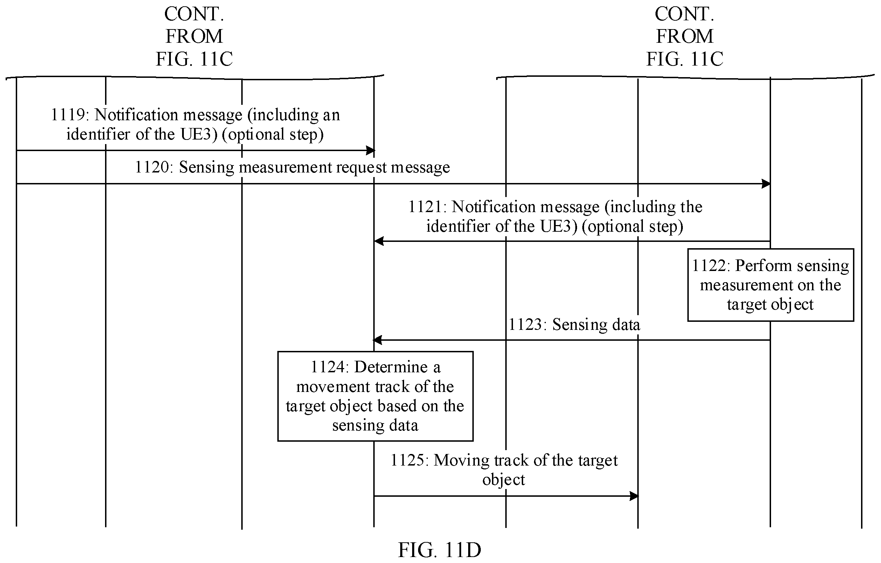

As shown in FIG. 11A, FIG. 11B, FIG. 11C, and FIG. 11D, the process may include the following steps.

Step 1101: UE 1 sends a registration request message to a serving AMF, where the registration request message carries an identifier of the UE 1 and sensing capability information of the UE 1.

Step 1102: The AMF stores the sensing capability information of the UE 1 in a context of the UE 1.

Step 1103: The AMF sends a registration accept message to the UE 1.

UE 2, UE 3, and UE 4 separately send a registration request message, and the AMF stores sensing capability information of the UE 2, the UE 3, and the UE 4 in contexts of the UEs. For a specific implementation process, refer to the registration procedure of UE 1.

Step 1104: The AF sends a sensing service request message to the SF, where the sensing service request message includes a first candidate UE list and first sensing requirement information of a target object, and the first candidate UE list includes an identifier of candidate UE that performs sensing measurement on the target object. The first sensing requirement information may include information about the target object (for example, information such as a location, a shape, and a size of the target object) and/or sensing measurement precision information.

Step 1105: The SF obtains information about a serving AMF of the candidate UE from a UDM.

Step 1106: The SF sends a request message to the AMF of the candidate UE, where the request message carries the identifier of the candidate UE.

Step 1107: After receiving the request message, the AMF obtains, based on the identifier of the candidate UE carried in the request message, sensing capability information of the candidate UE from a context of corresponding UE.

Step 1108: After receiving the request message, the AMF triggers a positioning procedure for the candidate UE based on the identifier of the candidate UE carried in the request message, to obtain location information of the candidate UE.

Step 1109: The AMF sends a response message to the SF, where the response message carries the identifier of the candidate UE and the sensing capability information of the candidate UE, and optionally may further carry the location information of the candidate UE.

Step 1110: The SF selects the UE 1 from candidate UE in the first candidate UE list as a target sensing device.

Step 1111: The SF sends a sensing measurement request message to the serving AMF of the UE 1, where the sensing measurement request message carries the identifier of the UE 1.

Step 1112: The serving AMF of the UE 1 sends the sensing measurement request message to the UE 1 based on the identifier of the UE 1 in the received sensing measurement request message.

Step 1113: The UE 1 performs sensing measurement on the target object.

Step 1114: The UE 1 sends sensing data obtained through measurement to the SF through the serving AMF of the UE 1.

For a specific implementation of step 1101 to step 1114, refer to step 901 to step 914 in FIG. 9A, FIG. 9B, and FIG. 9C.

Step 1115: The UE 1 determines that the target object moves to a first location, or that the UE 1 meets a sensing measurement termination condition, or that a condition for reselecting a sensing device for the target object is met currently, or that the UE 1 determines to reselect a sensing device.

Step 1116: The UE 1 sends a first message, where the first message includes second sensing requirement information of the target object, and the second sensing requirement information includes the location information of the target object. Optionally, the second sensing requirement information further includes sensing capability requirement information and/or sensing measurement precision information.

Step 1117: The UE 3 and the UE 4 separately send a first response message to the UE 1.

Step 1118: The UE 1 selects the UE 3 as the target sensing device.

Step 1119: The UE 1 sends a notification message to the SF, where the notification message carries identification information of the UE 3, to notify the SF of the newly selected sensing device.

Step 1120: The UE 1 sends a sensing measurement request message to the UE 3.

Step 1121: The UE 3 sends a notification message to the SF, where the notification message carries the identification information of the UE 3, to notify the SF of the newly selected sensing device.

Step 1122: The UE 3 performs sensing measurement on the target object.

Step 1123: The UE 3 sends sensing data obtained through measurement to the SF through the serving AMF of the UE 3.

Step 1124: The SF aggregates sensing data received a plurality of times, to generate a continuous movement track of the target object.

Step 1125: The SF sends the movement track of the target object to the AF.

For a specific implementation of step 1115 to step 1125, refer to step 1013 to step 1023 in FIG. 10A, FIG. 10B, and FIG. 10C.

It should be understood that a time sequence relationship of steps in the procedure shown in FIG. 11A, FIG. 11B, FIG. 11C, and FIG. 11D is merely a possible example. This is not limited in this application.

For a specific implementation of the foregoing steps in the procedure shown in FIG. 11A, FIG. 11B, FIG. 11C, and FIG. 11D, refer to related content in the procedure shown in FIG. 7.

It should be understood that FIG. 11A, FIG. 11B, FIG. 11C, and FIG. 11D are merely an example, in the foregoing scenario, of the procedure shown in FIG. 7. This is not limited in this application.

It may be understood that, to implement the functions in the foregoing embodiments, the sensing device and the network device include corresponding hardware structures and/or software modules for performing the functions. A person skilled in the art should easily be aware that, in combination with units and method steps in the examples described in embodiments disclosed in this application, this application can be implemented by hardware or a combination of hardware and computer software. Whether a first function is performed by using hardware or hardware driven by computer software depends on particular application scenarios and design constraints of the technical solutions.

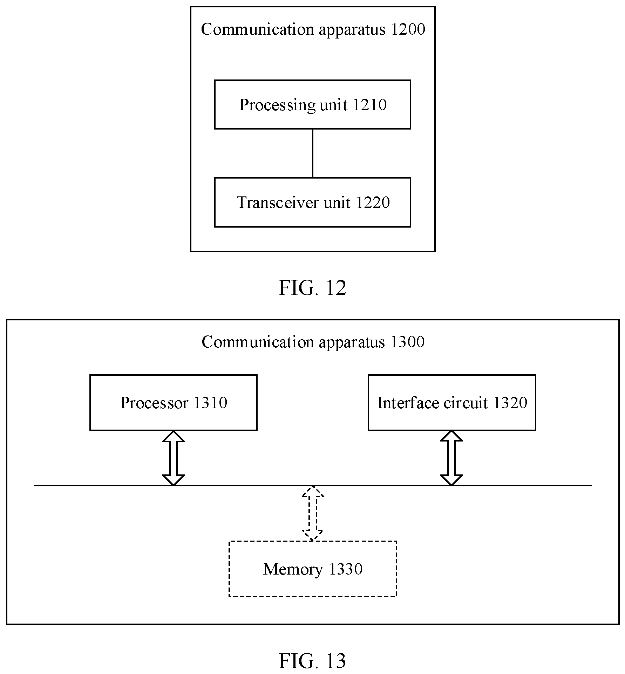

FIG. 12 and FIG. 13 are diagrams of structures of possible communication apparatuses according to embodiments of this application. The communication apparatus may be configured to implement functions of the network device or the sensing device in the foregoing method embodiments, and therefore can also implement beneficial effects of the foregoing method embodiments. In embodiments of this application, the communication apparatus may be a terminal device or a network device, or may be a module (for example, a chip) used in the terminal device or the network device.

As shown in FIG. 12, a communication apparatus 1200 includes a processing unit 1210 and a transceiver unit 1220. The communication apparatus 1200 is configured to implement a function of the network device (for example, the first core network element) or the sensing device in the method embodiment shown in any one of FIG. 6 to FIG. 11D.

For example, when the communication apparatus 1200 is configured to implement a function of the network device in the method embodiment shown in FIG. 6, FIG. 8A to FIG. 8C, or FIG. 9A to FIG. 9C: The transceiver unit 1220 receives first information from a second core network element, where the first information includes identification information of a first candidate sensing device for sensing a target object and first sensing requirement information of the target object. The processing unit 1210 is configured to select a first sensing device from the first candidate sensing device based on the first sensing requirement information of the target object. The processing unit 1210 sends a first sensing measurement request message to the first sensing device through the transceiver unit 1220, where the first sensing measurement request message is used to request the first sensing device to perform sensing measurement on the target object.

For another example, when the communication apparatus 1200 is configured to implement a function of the sensing device in the method embodiment shown in FIG. 7, FIG. 10A to FIG. 10C, or FIG. 11A to FIG. 11D: The transceiver unit 1220 is configured to receive a first sensing measurement request message, where the first sensing measurement request message is used to request to perform sensing measurement on a target object. The processing unit 1210 is configured to perform sensing measurement on the target object based on the first sensing measurement request message. The processing unit 1210 sends a first message through the transceiver unit 1220 when the target object moves to a first location, where the first message includes second sensing requirement information of the target object, and the second sensing requirement information includes location information of the target object. The transceiver unit 1220 receives first response messages from N sensing devices for sensing the target object, where N is an integer greater than or equal to 1. The processing unit 1210 selects a second sensing device from the N sensing devices, and sends a second sensing measurement request message to the second sensing device through the transceiver unit 1220, where the second sensing measurement request message is used to request the second sensing device to perform sensing measurement on the target object.

For more detailed descriptions of the processing unit 1210 and the transceiver unit 1220, directly refer to the related descriptions in the method embodiments shown in FIG. 6 to FIG. 11D. Details are not described herein again.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required by the processor 1310 to run the instructions, or store data generated after the processor 1310 runs the instructions.

When the communication apparatus 1300 is configured to implement the methods shown in FIG. 6 to FIG. 11D, the processor 1310 is configured to implement a function of the foregoing processing unit 1210, and the interface circuit 1320 is configured to implement a function of the foregoing transceiver unit 1220.

When the communication apparatus is a chip used in a device, the chip implements a function of the device in the foregoing method embodiments. The chip receives information from another module in the device, or the chip sends information to another module in the device.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

This application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. For example, the communication apparatus includes a processor and a memory. As shown in FIG. 13, the communication apparatus 1300 includes the processor 1310 and the memory 1330. The processor 1310 is coupled to the memory 1330. The memory 1330 stores instructions. When the instructions stored in the memory 1330 are executed by the processor 1310, the communication apparatus 1300 performs the method performed by the sensing device or the network device in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a network device or a terminal. Alternatively, the processor and the storage medium may exist in a network device or a terminal as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

In this application, at least one means one or more, and a plurality of means two or more. The term "and/or" describes an association relationship between associated objects and indicates that three relationships may exist. For example, A and/or B may indicate the following cases: Only A exists, both A and B exist, and only B exists. A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A sensing measurement method, comprising:
receiving, by a first core network element, first information from a second core network element, wherein the first information comprises identification information of a first candidate sensing device for sensing a target object and first sensing requirement information of the target object;
selecting, by the first core network element, a first sensing device from the first candidate sensing device based on the first sensing requirement information of the target object; and
sending, by the first core network element, a first sensing measurement request message to the first sensing device, wherein the first sensing measurement request message is used to request the first sensing device to perform sensing measurement on the target object.

2. The method according to claim 1, wherein selecting, by the first core network element, the first sensing device from the first candidate sensing device based on the first sensing requirement information comprises:
selecting, by the first core network element, the first sensing device from the first candidate sensing device based on the first sensing requirement information as well as sensing capability information of the first candidate sensing device and/or location information of the first candidate sensing device.

3. The method according to claim 2, further comprising:
obtaining, by the first core network element, the sensing capability information of the first candidate sensing device from a third core network element serving the first candidate sensing device.

4. The method according to claim 2 or 3, further comprising:
obtaining, by the first core network element, the location information of the first candidate sensing device from the third core network element serving the first candidate sensing device.

5. The method according to claim 2 or 3, wherein the first information further comprises the location information of the first candidate sensing device.

6. The method according to any one of claims 1 to 5, further comprising:
sending, by the first core network element, a request message to the second core network element when the target object moves to a first location, wherein the request message comprises location information of the target object;
receiving, by the first core network element, a response message from the second core network element, wherein the response message comprises second information, and the second information comprises identification information of a second candidate sensing device for sensing the target object;
selecting, by the first core network element, a second sensing device from the second candidate sensing device; and
sending, by the first core network element, a second sensing measurement request message to the second sensing device, wherein the second sensing measurement request message is used to request the second sensing device to perform sensing measurement on the target object.

7. The method according to claim 6, wherein sending, by the first core network element, the request message to the second core network element when the target object moves to the first location comprises:
sending, by the first core network element, the request message to the second core network element when the first core network element receives indication information from the first sensing device, wherein the indication information indicates that the first sensing device meets a sensing measurement termination condition.

8. The method according to claim 7, wherein the first sensing measurement request message comprises the sensing measurement termination condition, and the sensing measurement termination condition is used to trigger the first sensing device to send the indication information when the target object meets the sensing measurement termination condition.

9. The method according to claim 7 or 8, wherein the sensing measurement termination condition comprises one or more of the following:
received power of the target object for a sensing signal is detected to be less than a threshold; or
the target object moves out of or is about to move out of a sensing area of the sensing device.

10. The method according to claim 6, wherein sending, by the first core network element, the request message to the second core network element when the target object moves to the first location comprises:
sending, by the first core network element, the request message to the second core network element when the first core network determines, based on sensing data obtained by the first sensing device by performing sensing detection on the target object, that the first sensing device meets a sensing measurement termination condition.

11. The method according to claim 10, wherein determining that the first sensing device meets the sensing measurement termination condition comprises:
if the first core network element determines that the target object moves out of or is about to move out of a sensing area of the first sensing device, determining that the first sensing device meets the sensing measurement termination condition; or
if the first core network element determines that received power of the target object for a sensing signal sent by the first sensing device is less than a threshold, determining that the first sensing device meets the sensing measurement termination condition.

12. The method according to any one of claims 6 to 11, wherein selecting, by the first core network element, the second sensing device from the second candidate sensing device comprises:
selecting, by the first core network element, the second sensing device from the second candidate sensing device based on sensing capability information of the second candidate sensing device and/or location information of the second sensing device.

13. The method according to any one of claims 1 to 12, wherein receiving, by the first core network element, the first information from the second core network element comprises:
receiving, by the first core network element, a sensing service request message from the second core network element, wherein the sensing service request message comprises the first information.

14. The method according to any one of claims 2 to 13, wherein the sensing capability information comprises one or more of the following: information about a supported sensing mode and information about the sensing area.

15. The method according to any one of claims 1 to 14, wherein the first sensing requirement information comprises one or more of the following: information about the target object and sensing measurement precision information; and
the information about the target object comprises one or more of the following: the location information of the target object, a shape of the target object, and a size of the target object.

16. A sensing measurement method, comprising:
receiving, by a first sensing device, a first sensing measurement request message, wherein the first sensing measurement request message is used to request to perform sensing measurement on a target object;
performing, by the first sensing device, sensing measurement on the target object based on the first sensing measurement request message;
sending, by the first sensing device, a first message when the target object moves to a first location, wherein the first message comprises second sensing requirement information of the target object, and the second sensing requirement information comprises location information of the target object;
receiving, by the first sensing device, first response messages from N sensing devices for sensing the target object, wherein N is an integer greater than or equal to 1;
selecting, by the first sensing device, a second sensing device from the N sensing devices; and
sending, by the first sensing device, a second sensing measurement request message to the second sensing device, wherein the second sensing measurement request message is used to request the second sensing device to perform sensing measurement on the target object.

17. The method according to claim 16, wherein the second sensing requirement information further comprises one or more of the following: sensing capability requirement information indicating a sensing capability requirement, or sensing measurement precision information indicating a sensing measurement precision requirement; and
the N sensing devices meet the sensing capability requirement indicated by the sensing capability requirement information, and/or meet the sensing measurement precision requirement indicated by the sensing measurement precision information.

18. The method according to claim 17, wherein the sensing capability requirement information comprises: information indicating a sensing capability type requirement, and/or information indicating a sensing area size requirement.

19. The method according to claim 17 or 18, wherein the sensing measurement precision information comprises a distance threshold between a sensing device and the target object and/or a signal strength threshold.

20. The method according to any one of claims 17 to 19, wherein the first sensing measurement request message comprises the sensing capability requirement information and/or the sensing measurement precision information.

21. The method according to any one of claims 16 to 20, wherein selecting, by the first sensing device, the second sensing device from the N sensing devices comprises:
selecting, by the first sensing device, the second sensing device from the N sensing devices based on sensing capability information of the N sensing devices and/or location information of the N sensing devices.

22. The method according to claim 21, wherein the first response message sent by each of the N sensing devices comprises sensing capability information of the sensing device and/or location information of the sensing device.

23. The method according to claim 21 or 22, wherein the sensing capability information comprises one or more of the following: information about a supported sensing mode and information about a sensing area.

24. The method according to any one of claims 16 to 23, wherein sending, by the first sensing device, the first message when the target object moves to the first location comprises:
sending, by the first sensing device, the first message when the first sensing device determines, based on the sensing measurement performed on the target object, that the first sensing device meets the sensing measurement termination condition.

25. The method according to claim 24, wherein the first sensing measurement request message further comprises the sensing measurement termination condition.

26. The method according to claim 24 or 25, wherein the sensing measurement termination condition comprises one or more of the following:
received power of the target object for a sensing signal is less than a threshold; or
the target object moves out of or is about to move out of the sensing area.

27. The method according to any one of claims 16 to 26, wherein after selecting, by the first sensing device, the second sensing device from the N sensing devices, the method further comprises:
sending, by the first sensing device, a notification message to a first core network element, wherein the notification message comprises an identifier of the second sensing device, and the first core network element is configured to receive sensing data of the second sensing device.

28. A communication apparatus, comprising a unit or a module configured to perform the method according to any one of claims 1 to 15, or comprising a unit or a module configured to perform the method according to any one of claims 16 to 27.

29. A communication apparatus, comprising one or more processors configured to perform the method according to any one of claims 1 to 15 or perform the method according to any one of claims 16 to 27.

30. A readable storage medium, wherein the readable storage medium stores a program, and when the program is executed by a communication apparatus, the method according to any one of claims 1 to 15 or the method according to any one of claims 16 to 27 is implemented.

31. A chip system, comprising: a memory, configured to store a computer program; and a processor, wherein after the processor invokes the computer program from the memory and runs the computer program, a communication apparatus on which the chip system is installed performs the method according to any one of claims 1 to 15 or the method according to any one of claims 16 to 27.

32. A computer program product, wherein when the computer program product is invoked by a computer, the computer is enabled to perform the method according to any one of claims 1 to 15, or perform the method according to any one of claims 16 to 27.
